(19) Europäisches Patentamt / European Patent Office / Office européen des brevets

(11) **EP 3 021 384 B1**

(12) **EUROPEAN PATENT SPECIFICATION**

(45) Date of publication and mention of the grant of the patent:
**30.10.2019 Bulletin 2019/44**

(21) Application number: **14822057.7**

(22) Date of filing: **25.06.2014**

(51) Int Cl.:
*H01M 4/36* (2006.01)  *H01M 10/0525* (2010.01)
*H01M 4/62* (2006.01)  *C08G 18/48* (2006.01)
*C08G 18/32* (2006.01)  *C08G 18/66* (2006.01)
*C08G 18/44* (2006.01)  *C09D 133/02* (2006.01)
*H01M 4/525* (2010.01)  *H01M 4/587* (2010.01)

(86) International application number:
**PCT/JP2014/066868**

(87) International publication number:
**WO 2015/005117 (15.01.2015 Gazette 2015/02)**

(54) **RESIN FOR COATING LITHIUM-ION-BATTERY ACTIVE MATERIAL, RESIN COMPOSITION FOR COATING LITHIUM-ION-BATTERY ACTIVE MATERIAL, AND COATED ACTIVE MATERIAL FOR LITHIUM-ION BATTERY**

HARZ ZUM BESCHICHTEN EINES AKTIVMATERIALS EINER LITHIUM-IONEN-BATTERIE, HARZZUSAMMENSETZUNG FÜR AKTIVMATERIAL EINER LITHIUM-IONEN-BATTERIE UND BESCHICHTETES AKTIVMATERIAL FÜR EINE LITHIUM-IONEN-BATTERIE

RÉSINE POUR ENROBER UN MATÉRIAU ACTIF DE BATTERIE AU LITHIUM-ION, COMPOSITION DE RÉSINE POUR ENROBER UN MATÉRIAU ACTIF DE BATTERIE AU LITHIUM-ION ET MATÉRIAU ACTIF ENROBÉ POUR UNE BATTERIE AU LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2013 JP 2013142966**

(43) Date of publication of application:
**18.05.2016 Bulletin 2016/20**

(73) Proprietors:
• **Sanyo Chemical Industries, Ltd.**
  **Kyoto-shi, Kyoto 605-0995 (JP)**
• **NISSAN MOTOR CO., LTD.**
  **Yokohama-shi, Kanagawa 221-0023 (JP)**

(72) Inventors:
• **MIZUNO Yusuke**
  **Kyoto-shi**
  **Kyoto 605-0995 (JP)**
• **SHINDO Yasuhiro**
  **Kyoto-shi**
  **Kyoto 605-0995 (JP)**
• **TSUDO Yasuhiro**
  **Kyoto-shi**
  **Kyoto 605-0995 (JP)**
• **KAWAKITA Kenichi**
  **Kyoto-shi**
  **Kyoto 605-0995 (JP)**
• **MURAKAMI Yuta**
  **Kyoto-shi**
  **Kyoto 605-0995 (JP)**
• **KUSACHI Yuki**
  **Yokohama-shi**
  **Kanagawa 221-0023 (JP)**
• **OHSAWA Yasuhiko**
  **Yokohama-shi**
  **Kanagawa 221-0023 (JP)**
• **AKAMA Hiroshi**
  **Yokohama-shi**
  **Kanagawa 221-0023 (JP)**
• **HORIE Hideaki**
  **Yokohama-shi**
  **Kanagawa 221-0023 (JP)**

(74) Representative: **Hoefer & Partner Patentanwälte mbB**
  **Pilgersheimer Straße 20**
  **81543 München (DE)**

(56) References cited:
  **EP-A1- 1 688 447    EP-A1- 2 832 754**

EP-A2- 1 189 243          WO-A1-2013/002369          JP-A- 2014 103 052          US-A1- 2002 031 701
JP-A- H01 140 554         JP-A- 2000 048 807          US-A1- 2006 235 144          US-A1- 2009 061 172
JP-A- 2000 220 076        JP-A- 2003 003 078
JP-A- 2011 210 666        JP-A- 2012 197 446

**Description**

TECHNICAL FIELD

The present invention relates to a coated active material for lithium ion batteries.

BACKGROUND ART

A reduction in emission of carbon dioxide has been strongly desired for environmental protection these days. The automobile industry has placed great expectation on electric vehicles (EV) and hybrid electric vehicles (HEV) introduced to reduce emission of carbon dioxide, and thus has been extensively developing secondary batteries for driving motors, which are the key to practical use thereof. Among those secondary batteries, lithium ion secondary batteries have received attention because high energy density and high output power density can be attained.

A typical lithium ion secondary battery includes electrodes composed of a positive electrode current collector onto which a positive electrode active material is applied together with a binder and a negative electrode current collector onto which a negative electrode active material is applied together with a binder. A bipolar battery includes a bipolar electrode composed of a current collector having a positive electrode layer formed by applying a positive electrode active material together with a binder onto one surface of the current collector and a negative electrode layer formed by applying a negative electrode active material together with a binder onto the other surface thereof.

Usable positive electrode active materials are complex oxides containing lithium, such as $LiCoO_2$, and usable negative electrode active materials are carbon materials and silicon materials. The volume of the positive electrode active material and that of the negative electrode active material change due to intercalation and deintercalation of lithium ions during the charge and discharge process of the lithium ion battery.

Patent Literature 1 proposes a non-aqueous electrolyte secondary battery including a negative electrode active material composed of graphitized mesophase carbon particles. Patent Literature 1 purports that soft graphitized mesophase carbon particles used as the negative electrode active material can prevent expansion of the negative electrode accompanied by charge and discharge of the battery, enhancing the cycle life characteristics of the non-aqueous electrolyte secondary battery.

Patent Literature 2 discloses a secondary battery exhibiting a long cycle life and comprising a negative pole activating material made of lithium or zinc is provided, the battery at least having a negative pole made of lithium or zinc serving as the negative pole activating material, an electrolyte (electrolytic solution), a separator, a positive pole made of a positive pole activating material, a collecting electrode and a battery case, wherein at least the surface of the negative pole is covered with a film having a structure which allows ions relating to the battery reactions to pass through. Since growth of dendrite of lithium or zinc at the time of the charge can be prevented, short circuit between the negative pole and the positive pole can be prevented. Therefore, the charge/discharge cycle life can significantly be lengthened. As a result, a lithium secondary battery, a nickel-zinc secondary battery, an air-zinc secondary battery, a bromine-zinc secondary battery and a silver oxide-zinc secondary battery of the long cycle life can be manufactured.

CITATION LIST

- Patent Literature

Patent Literature 1: JP 2010-140795 A

Patent Literature 2: US 2002/031701 A1

SUMMARY OF INVENTION

- Technical Problem

Unfortunately, the non-aqueous electrolyte secondary batteries including the negative electrode active material described in Patent Literature 1 have an insufficient effect of preventing expansion of the negative electrode. In addition, a change in the volume of the positive electrode is not taken into consideration in Patent Literature 1. Accordingly, a non-aqueous electrolyte secondary battery has been required whose negative electrode and positive electrode do not expand.

The present invention has been made in consideration of the above problems. An object of the present invention is to provide a coated active material for lithium ion batteries comprising a resin for coating an active material for lithium ion batteries which can prevent expansion of electrodes without inhibiting conduction of lithium ions.

- Solution to Problem

The present inventors conducted extensive research to solve the above problems and achieved the present invention.

Namely, the present invention provides: a coated active material for lithium ion batteries comprising: a resin composition for coating an active material for lithium ion batteries, comprising: a resin for coating an active material for lithium ion batteries; and a conductive additive (X); and an active material for lithium ion batteries (Y), wherein the surface of the active material for lithium ion batteries (Y) is partially or entirely coated with the resin composition for coating an active material for lithium ion batteries, the A resin for coating an active material for lithium ion batteries has a liquid absorbing rate of 10% or more when the resin is immersed in an electrolyte solution, and a tensile elongation at break of 10% or more when the resin is saturated with the electrolyte solution, the liquid absorbing rate is determined from the weights of the coating resin measured before and after immersion in the electrolyte solution and the following expression: liquid absorbing rate (%) = [(weight of coating resin after immersion in electrolyte solution - weight of coating resin before immersion in electrolyte solution)/weight of coating resin before immersion in electrolyte solution] $\times$ 100, the electrolyte solution used to determine the liquid absorbing rate is prepared by dissolving an electrolyte $LiPF_6$ in a mixed solvent of ethylene carbonate (EC) and diethyl carbonate (DEC) at EC:DEC = 3:7 (volume proportion) such that the concentration of $LiPF_6$ is 1 mol/L, in determination of the liquid absorbing rate, the resin is immersed in the electrolyte solution at 50°C for 3 days, the tensile elongation at break is determined as follows: the coating resin is punched into a dumbbell shape; this test piece is immersed in an electrolyte solution at 50°C for 3 days in the same manner as in determination of the liquid absorbing rate to saturate the coating resin with the electrolyte solution; and the tensile elongation at break of the resulting test piece is measured in accordance with ASTM D683 using a shape of test piece: Type II, the tensile elongation at break is a value obtained by calculating the elongation until the test piece breaks in a tensile test from the following expression: tensile elongation at break (%) = [(length of test piece at break - length of test piece before test)/length of test piece before test] $\times$ 100, the resin for coating an active material for lithium ion batteries comprises a vinyl resin, the active material for lithium ion batteries (Y) includes a positive electrode active material (Y1) or a negative electrode active material (Y2), the positive electrode active material (Y1) includes complex oxides of lithium and transition metal, transition metal oxide, transition metal sulfide, or conductive polymer, and the negative electrode active material (Y2) includes graphite, amorphous carbon, burned high-molecular compound, cokes, carbon fibers, conductive polymers, tin, or silicon.

- Advantageous Effects of Invention

When the resin for coating an active material for lithium ion batteries used according to the present invention coats the surface of the active material for lithium ion batteries, a change in the volume of the electrode can be relaxed by the flexibility of the resin, preventing expansion of the electrode. In addition, the resin for coating an active material for lithium ion batteries used according to the present invention has the lithium ion conductivity, and thus the resin can attain lithium ion batteries having sufficient charge and discharge characteristics without inhibiting the action of the active material.

DESCRIPTION OF EMBODIMENTS

The present invention will now be described in detail.

The resin for coating an active material for lithium ion batteries used according to the present invention has a liquid absorbing rate of 10% or more when the resin is immersed in an electrolyte solution, and a tensile elongation at break of 10% or more when the resin is saturated with the electrolyte solution.

The resin for coating an active material for lithium ion batteries used according to the present invention (hereinafter also simply referred to as coating resin) has a liquid absorbing rate of 10% or more when the resin is immersed in the electrolyte solution. The liquid absorbing rate when the resin is immersed in the electrolyte solution is determined from the weights of the coating resin measured before and after immersion in the electrolyte solution and the following expression:

liquid absorbing rate (%) = [(weight of coating resin after immersion in electrolyte solution - weight of coating resin before immersion in electrolyte solution)/weight of coating resin before immersion in electrolyte solution] $\times$ 100

The electrolyte solution used to determine the liquid absorbing rate is prepared by dissolving an electrolyte LiPF$_6$ in a mixed solvent of ethylene carbonate (EC) and diethyl carbonate (DEC) at EC:DEC = 3:7 (volume proportion) such that the concentration of LiPF$_6$ is 1 mol/L.

In determination of the liquid absorbing rate, the resin is immersed in the electrolyte solution at 50°C for 3 days. Immersion at 50°C for 3 days attains the coating resin saturated with the electrolyte solution. The term "saturated with the electrolyte solution" refers to the state where the weight of the coating resin no longer increases if the coating resin is further immersed in the electrolyte solution.

The electrolyte solution usable in production of lithium ion batteries using the resin for coating an active material for lithium ion batteries used according to the present invention should not be limited to the electrolyte solution described above, and any other electrolyte solution can be used.

At a liquid absorbing rate of 10% or more, the coating resin sufficiently absorbs the electrolyte solution so that lithium ions can readily pass through the coating resin without inhibiting migration of lithium ions between the active material and the electrolyte solution. At a liquid absorbing rate of less than 10%, the electrolyte solution barely permeates into the coating resin to reduce the lithium ion conductivity so that the performance of the lithium ion battery may not be sufficiently attained.

The liquid absorbing rate is desirably 20% or more, more desirably 30% or more.

The upper limit of the liquid absorbing rate is desirably 400%, more desirably 300%.

The lithium ion conductivity of the resin for coating an active material for lithium ion batteries used according to the present invention is determined by the measurement of the conductivity of the coating resin saturated with the electrolyte solution by an alternating current impedance method at room temperature.

The lithium ion conductivity measured by this method is desirably 1.0 to 10.0 mS/cm. The lithium ion conductivity within this range achieves sufficient performance of the lithium ion batteries.

The resin for coating an active material for lithium ion batteries used according to the present invention has a tensile elongation at break of 10% or more when the resin is saturated with the electrolyte solution.

The tensile elongation at break when the resin is saturated with the electrolyte solution is determined as follows: the coating resin is punched into a dumbbell shape; this test piece is immersed in an electrolyte solution at 50°C for 3 days in the same manner as in determination of the liquid absorbing rate to saturate the coating resin with the electrolyte solution; and the tensile elongation at break of the resulting test piece is measured in accordance with ASTM D683 (shape of test piece: Type II). The tensile elongation at break is a value obtained by calculating the elongation until the test piece breaks in a tensile test from the following expression:

$$\text{tensile elongation at break (\%)} = [(\text{length of test piece at break - length of test piece before test})/\text{length of test piece before test}] \times 100$$

If the coating resin saturated with the electrolyte solution has a tensile elongation at break of 10% or more, the coating resin has appropriate flexibility. Such a resin coating the active material for lithium ion batteries can relax a change in the volume of the electrode and prevent expansion of the electrode.

The tensile elongation at break is desirably 20% or more, more desirably 30% or more.

The upper limit of the tensile elongation at break is desirably 400%, more desirably 300%.

Resins for coating an active material for lithium ion batteries may desirably includes a fluorinated resin, a polyester resin, a polyether resin, a vinyl resin, a urethane resin, a polyamide resin, or a mixture thereof. However, according to the present invention, the resin for coating an active material for lithium ion batteries comprises a vinyl resin.

The urethane resin which may be contained in a resin for coating an active material for lithium ion batteries may be a urethane resin (A) prepared through a reaction of an active hydrogen component (a1) with an isocyanate component (a2).

The urethane resin (A) has flexibility. Such a resin coating the active material for lithium ion batteries can relax a change in the volume of the electrode, preventing expansion of the electrode.

The active hydrogen component (a1) desirably contains at least one selected from the group consisting of polyetherdiols, polycarbonatediols, and polyesterdiols.

Examples of the polyetherdiols include poly(oxyethylene)glycol (hereinafter abbreviated to PEG), poly(oxyethylene-oxypropylene) block copolymer diols, poly(oxyethylene-oxytetramethylene) block copolymer diols; ethylene oxide adducts of low molecular glycol, such as ethylene glycol, propylene glycol, 1,4-butanediol, 1,6-hexamethylene glycol, neopentyl glycol, bis(hydroxymethyl)cyclohexane, 4,4'-bis(2-hydroxyethoxy)-diphenylpropane; condensed polyether ester diols prepared by reacting PEGs having a number average molecular weight of 2,000 or less with one or more dicarboxylic acids [such as aliphatic dicarboxylic acid having 4 to 10 carbon atoms (such as succinic acid, adipic acid, and sebacic acid) and aromatic dicarboxylic acid having 8 to 15 carbon atoms (such as terephthalic acid and isophthalic acid)]; and mixtures of two or more thereof.

If the polyetherdiol contains an oxyethylene unit, the content of the oxyethylene unit is preferably 20% by weight, more preferably 30% by weight or more, still more preferably 40% by weight or more.

Examples of the polyetherdiols also include poly(oxypropylene)glycol, poly(oxytetramethylene)glycol (hereinafter abbreviated to PTMG), and poly(oxypropylene-oxytetramethylene) block copolymer diols.

Among these, preferred are PEG, poly(oxyethylene-oxypropylene) block copolymer diols, and poly(oxyethylene-oxytetramethylene) block copolymer diols, particularly preferred is PEG.

These polyetherdiols can be used singly or in the form of a mixture of two or more.

Examples of the polycarbonatediols include polycarbonatepolyols (such as polyhexamethylenecarbonate diol) produced through condensation of one or two or more alkylenediols having an alkylene group having 4 to 12 carbon atoms, preferably 6 to 10 carbon atoms, more preferably 6 to 9 carbon atoms and a low molecular carbonate compound (such as dialkylcarbonates having an alkyl group having 1 to 6 carbon atoms, alkylenecarbonates having an alkylene group having 2 to 6 carbon atoms, and diarylcarbonates having an aryl group having 6 to 9 carbon atoms) while dealcoholization is being performed.

Examples of the polyesterdiols include condensed polyesterdiols prepared through reaction of a low molecular diol and/or a polyetherdiol having a number average molecular weight of 1,000 or less with one or more of the dicarboxylic acids listed above; and poly(lactone)diols prepared through ring-opening polymerization of lactones having 4 to 12 carbon atoms. Examples of the low molecular diol include low molecular glycols listed as examples of the polyetherdiols. Examples of the polyetherdiol having a number average molecular weight of 1,000 or less include poly(oxypropylene)glycol and PTMG. Examples of the lactones include ε-caprolactone and γ-valerolactone. Specific examples of the polyesterdiol include poly(ethylene adipate)diol, poly(butylene adipate)diol, poly(neopentylene adipate)diol, poly(3-methyl-1,5-pentylene adipate)diol, poly(hexamethylene adipate)diol, poly(caprolactone)diol, and mixtures of two or more thereof.

The active hydrogen component (a1) may be a mixture of two or more of the polyetherdiols, the polycarbonatediols, and the polyesterdiols.

The active hydrogen component (a1) desirably contains a polymer diol (a11) having a number average molecular weight of 2,500 to 15,000 as an essential component. Examples of the polymer diol (a11) include the polyetherdiols, the polycarbonatediols, and the polyesterdiols listed above.

The polymer diol (a11) having a number average molecular weight of 2,500 to 15,000 is preferred because such a polymer diol attains a urethane resin (A) having appropriate softness and enhances the strength of the coating formed on the active material.

The number average molecular weight of the polymer diol (a11) is more desirably 3,000 to 12,500, still more desirably 4,000 to 10,000.

The number average molecular weight of the polymer diol (a11) can be calculated from the hydroxyl value of the polymer diol.

The hydroxyl value can be measured in accordance with JIS K1557-1.

Desirably, the active hydrogen component (a1) contains a polymer diol (a11) having a number average molecular weight of 2,500 to 15,000 as an essential component, and the polymer diol (a11) desirably has a solubility parameter (hereinafter abbreviated to SP value) of 8.0 to 12.0 $(cal/cm^3)^{1/2}$. The SP value of the polymer diol (a11) is more desirably 8.5 to 11.5 $(cal/cm^3)^{1/2}$, still more desirably 9.0 to 11.0 $(cal/cm^3)^{1/2}$.

The SP value is calculated by Fedors method. The SP value is expressed by the following expression:

$$\text{SP value } (\delta) = (\Delta H/V)^{1/2}$$

wherein $\Delta H$ represents molar heat of vaporization (cal), and V represents a molar volume $(cm^3)$.

For $\Delta H$ and V, the total molar heat of vaporization $(\Delta H)$ of the atomic group and the total molar volume (V) of the atomic group described in "POLYMER ENGINEERING AND SCIENCE, 1974, Vol. 14, No. 2, ROBERT F. FEDORS. (pp. 151 to 153)" can also be used.

The SP value is an index indicating miscibility. In other words, compounds having close SP values are readily mixed with each other (highly miscible), and that those having distant SP values are barely mixed with each other.

The polymer diol (a11) preferably has an SP value of 8.0 to 12.0 $(cal/cm^3)^{1/2}$ in view of absorption of the electrolyte solution by the urethane resin (A).

Desirably, the active hydrogen component (a1) contains the polymer diol (a11) having a number average molecular weight of 2,500 to 15,000 as an essential component, and the content of the polymer diol (a11) is desirably 20 to 80% by weight relative to the weight of the urethane resin (A). The content of the polymer diol (a11) is more desirably 30 to 70% by weight, still more desirably 40 to 65% by weight.

The content of the polymer diol (a11) is preferably 20 to 80% by weight in view of absorption of the electrolyte solution by the urethane resin (A).

The active hydrogen component (a1) desirably contains the polymer diol (a11) having a number average molecular weight of 2,500 to 15,000 and a chain extender (a13) as essential components.

Examples of the chain extender (a13) include low molecular diols having 2 to 10 carbon atoms [such as ethylene glycol (hereinafter abbreviated to EG), propylene glycol, 1,4-butanediol (hereinafter abbreviated to 1,4-BG), diethylene glycol (hereinafter abbreviated to DEG), and 1,6-hexamethylene glycol]; diamines [such as aliphatic diamines having 2 to 6 carbon atoms (such as ethylenediamine and 1,2-propylenediamine), alicyclic diamines having 6 to 15 carbon atoms (such as isophoronediamine and 4,4'-diaminodicyclohexylmethane), and aromatic diamines having 6 to 15 carbon atoms (such as 4,4'-diaminodiphenylmethane)]; monoalkanolamines (such as monoethanolamine); hydrazine or derivatives thereof (such as adipic dihydrazide); and mixtures of two or more thereof. Among these chain extenders, preferred are low molecular diols, and particularly preferred are EG, DEG, and 1,4-BG.

A preferred combination of the polymer diol (a11) and the chain extender (a13) is a combination of PEG as the polymer diol (a11) and EG as the chain extender (a13), or polycarbonate diol as the polymer diol (a11) and EG as the chain extender (a13).

Desirably, the active hydrogen component (a1) contains the polymer diol (a11) having a number average molecular weight of 2,500 to 15,000, a diol (a12) other than the polymer diol (a11), and the chain extender (a13), the equivalent ratio of (a11) to (a12), {(a11)/(a12)}, being 10/1 to 30/1, and the equivalent ratio of (a11) to the total equivalent of (a12) and (a13), {(a11)/[(a12) + (a13)]}, being 0.9/1 to 1.1/1.

The equivalent ratio of (a11) to (a12), {(a11)/(a12)}, is more desirably 13/1 to 25/1, still more desirably 15/1 to 20/1.

The diol (a12) other than the polymer diol (a11) can be any diol not included in the polymer diol (a11) described above. Specifically, examples thereof include diols having number average molecular weight of less than 2,500, and diols having a number average molecular weight of more than 15,000.

The types of the diol are the polyetherdiols, the polycarbonatediols, and the polyesterdiols described above.

The diol (a12) other than the polymer diol (a11) does not include the low molecular diol having 2 to 10 carbon atoms, which is a diol other than the polymer diol (a11) and is contained in the chain extender (a13).

Any isocyanate conventionally used in production of polyurethane can be used as the isocyanate component (a2). Examples of such isocyanates include aromatic diisocyanates having 6 to 20 carbon atoms (excluding carbon in the NCO group, the same shall apply hereafter), aliphatic diisocyanates having 2 to 18 carbon atoms, alicyclic diisocyanates having 4 to 15 carbon atoms, aromatic aliphatic diisocyanates having 8 to 15 carbon atoms, modified products of these diisocyanates (such as carbodiimide modified products, urethane modified products, and uretdione modified products thereof), and mixtures of two or more thereof.

Specific examples of the aromatic diisocyanates include 1,3- or 1,4-phenylene diisocyanate, 2,4- or 2,6-tolylene diisocyanate, 2,4'- or 4,4'-diphenylmethane diisocyanate (hereinafter diphenylmethane diisocyanate is abbreviated to MDI), 4,4'-diisocyanatobiphenyl, 3,3'-dimethyl-4,4'-diisocyanatobiphenyl, 3,3'-dimethyl-4,4'-diisocyanatodiphenylmethane, and 1,5-naphthylene diisocyanate.

Specific examples of the aliphatic diisocyanates include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanatomethyl caproate, bis(2-isocyanatoethyl)carbonate, and 2-isocyanatoethyl-2,6-diisocyanatohexanoate.

Specific examples of the alicyclic diisocyanates include isophorone diisocyanate, dicyclohexylmethane-4,4'-diisocyanate, cyclohexylene diisocyanate, methylcyclohexylene diisocyanate, bis(2-isocyanatoethyl)-4-cyclohexylene-1,2-dicarboxylate, and 2,5- or 2,6-norbornane diisocyanate.

Specific examples of the aromatic aliphatic diisocyanates include m- or p-xylylene diisocyanate, and $\alpha,\alpha,\alpha',\alpha'$-tetramethylxylylene diisocyanate.

Among these compounds, preferred are the aromatic diisocyanates and the alicyclic diisocyanates, more preferred are the aromatic diisocyanates, particularly preferred is MDI.

If the urethane resin (A) contains the polymer diol (a11) and the isocyanate component (a2), the equivalent ratio (a2)/(a11) is preferably 10/1 to 30/1, more preferably 11/1 to 28/1. The ratio of the isocyanate component (a2) more than 30 equivalents results in a hard coating.

If the urethane resin (A) contains the polymer diol (a11), the chain extender (a13), and the isocyanate component (a2), the equivalent ratio (a2)/[(a11) + (a13)] is usually 0.9/1 to 1.1/1, preferably 0.95/1 to 1.05/1. At an equivalent ratio out of this range, the urethane resin may not have a sufficient high molecular weight.

The urethane resin (A) has a number average molecular weight of desirably 40,000 to 500,000, more desirably 50,000 to 400,000. A urethane resin (A) having a number average molecular weight of less than 40,000 reduces the strength of the coating. A urethane resin (A) having a number average molecular weight of more than 500,000 may increase the viscosity of the solution, preventing formation of a uniform coating.

The number average molecular weight of the urethane resin (A) is determined as follows: Dimethylformamide (hereinafter abbreviated to DMF) is used as a solvent, and the urethane resin (A) is measured by gel permeation chromatography (hereinafter abbreviated to GPC) using poly(oxypropylene)glycol as a standard substance. The concentration of the sample can be 0.25% by weight. The stationary phase of the column can be one TSKgel SuperH2000, one TSKgel SuperH3000, and one TSKgel SuperH4000 (all of which are manufactured by Tosoh Corporation) connected in series. The column temperature can be 40°C.

The urethane resin (A) can be produced through reaction of the active hydrogen component (a1) with the isocyanate component (a2).

Examples of the method of producing the urethane resin (A) include a one-shot method of using the polymer diol (a11) as the active hydrogen component (a1) and the chain extender (a13), and simultaneously reacting the isocyanate component (a2) with the polymer diol (a11) and the chain extender (a13), and a prepolymer method of preliminarily reacting the polymer diol (a11) with the isocyanate component (a2), and subsequently reacting the resulting prepolymer with the chain extender (a13).

The urethane resin (A) can be produced in the presence of or in the absence of a solvent inactive to the isocyanate group. Examples of appropriate solvents for production of the urethane resin (A) in the presence of the solvent include amide solvents [such as DMF and dimethylacetamide], sulfoxide solvents (such as dimethyl sulfoxide), ketone solvents [such as methyl ethyl ketone and methyl isobutyl ketone], aromatic solvents (such as toluene and xylene), ether solvents (such as dioxane and tetrahydrofuran), ester solvents (such as ethyl acetate and butyl acetate), and mixtures of two or more thereof. Among these solvents, preferred are amide solvents, ketone solvents, aromatic solvents, and mixtures of two or more thereof.

The urethane resin (A) can be produced at the same reaction temperature as that usually used in the urethanization reaction. The reaction temperature is usually 20 to 100°C in the presence of the solvent and is usually 20 to 220°C in the absence of the solvent.

To promote the reaction, a catalyst [such as an amine catalyst (such as triethylamine and triethylenediamine) or a tin catalyst (such as dibutyltin dilaurate)] usually used in the polyurethane reaction can be used when necessary.

A reaction terminator [such as a monovalent alcohol (such as ethanol, isopropyl alcohol, or butanol), or a monovalent amine (such as dimethylamine or dibutylamine) can be used when necessary.

The urethane resin (A) can be produced with a production apparatus usually used in the industry. In the absence of the solvent, a production apparatus such as a kneader or an extruder can be used. The solution viscosity of the solution of the resulting urethane resin (A) in DMF (solid content: 30% by weight) is usually 10 to 10,000 poise (1 to 1,000 Pa ·s) /20°C, preferably 100 to 2,000 poise (10 to 200 Pa ·s)/20°C for practical use.

The resin for coating an active material for lithium ion batteries used according to the present invention includes the vinyl resin desirably including a polymer (B) containing a vinyl monomer (b) as an essential constituent monomer.

The polymer (B) containing a vinyl monomer (b) as an essential constituent monomer has flexibility. Such a polymer (B) coating the active material for lithium ion batteries can relax a change in the volume of the electrode, preventing expansion of the electrode.

In particular, the vinyl monomer (b) desirably includes a vinyl monomer (b1) having a carboxyl group and a vinyl monomer (b2) represented by Formula (1):

$$CH_2=C(R^1)COOR^2 \qquad (1)$$

wherein $R^1$ is a hydrogen atom or a methyl group; and $R^2$ is a branched alkyl group having 4 to 36 carbon atoms.

Examples of the vinyl monomer (b1) having a carboxyl group include monocarboxylic acids having 3 to 15 carbon atoms, such as (meth)acrylic acid, crotonic acid, and cinnamic acid; dicarboxylic acids having 4 to 24 carbon atoms, such as (anhydrous) maleic acid, fumaric acid, (anhydrous) itaconic acid, citraconic acid, and mesaconic acid; and trivalent to tetravalent or higher valent polycarboxylic acids having 6 to 24 carbon atoms, such as aconitic acid. Among these monomers, preferred is (meth)acrylic acid, particularly preferred is methacrylic acid.

In the vinyl monomer (b2) represented by Formula (1), $R^1$ represents a hydrogen atom or a methyl group. $R^1$ is preferably a methyl group.

$R^2$ is a branched alkyl group having 4 to 36 carbon atoms. Specific examples of $R^2$ include 1-alkylalkyl groups (such as a 1-methylpropyl group (sec-butyl group), a 1,1-dimethylethyl group (tert-butyl group), a 1-methylbutyl group, a 1-ethylpropyl group, a 1,1-dimethylpropyl group, a 1-methylpentyl group, a 1-ethylbutyl group, a 1-methylhexyl group, a 1-ethylpentyl group, a 1-methylheptyl group, a 1-ethylhexyl group, a 1-methyloctyl group, a 1-ethylheptyl group, a 1-methylnonyl group, a 1-ethyloctyl group, a 1-methyldecyl group, a 1-ethylnonyl group, a 1-butyleicosyl group, a 1-hexyloctadecyl group, a 1-octylhexadecyl group, a 1-decyltetradecyl group, a 1-undecyltridecyl group); 2-alkylalkyl groups (such as a 2-methylpropyl group (iso-butyl group), a 2-methylbutyl group, a 2-ethylpropyl group, a 2,2-dimethylpropyl group, a 2-methylpentyl group, a 2-ethylbutyl group, a 2-methylhexyl group, a 2-ethylpentyl group, a 2-methylheptyl group, a 2-ethylhexyl group, a 2-methyloctyl group, a 2-ethylheptyl group, a 2-methylnonyl group, a 2-ethyloctyl group, a 2-methyldecyl group, a 2-ethylnonyl group, a 2-hexyloctadecyl group, a 2-octylhexadecyl group, a 2-decyltetradecyl group, a 2-undecyltridecyl group, a 2-dodecylhexadecyl group, a 2-tridecylpentadecyl group, a 2-decyloctadecyl group, a 2-tetradecyloctadecyl group, a 2-hexadecyloctadecyl group, a 2-tetradecyleicosyl group, and a 2-hexadecyleicosyl group); 3 to 34-alkylalkyl groups (such as a 3-alkylalkyl group, a 4-alkylalkyl group, a 5-alkylalkyl group, a 32-alkylalkyl group, a 33-alkylalkyl group, and a 34-alkylalkyl group); and mixed alkyl groups containing one or more branched alkyl groups such as alkyl residues of oxoalcohol corresponding to propylene oligomers (heptamers to undecamers), ethylene/propylene (molar ratio: 16/1 to 1/11) oligomers, isobutylene oligomers (heptamers to octamers), and α-olefin (having 5 to 20 carbon atoms) oligomers (tetramers to octamers).

Among these groups, preferred are the 2-alkylalkyl groups, more preferred are the 2-ethylhexyl group and the 2-decyltetradecyl group in view of absorption of the electrolyte solution.

The monomers forming the polymer (B) may contain a copolymerizable vinyl monomer (b3) containing no active hydrogen in addition to the vinyl monomer (b1) and the vinyl monomer (b2) represented by Formula (1).

Examples of the copolymerizable vinyl monomer (b3) containing no active hydrogen include the following copolymerizable vinyl monomers (b31) to (b35):

(b31) Carvyl (meth)acrylate formed from a monool having 1 to 20 carbon atoms and (meth)acrylic acid
Examples of the monool include (i) aliphatic monools [such as methanol, ethanol, n- and i-propyl alcohols, n-butyl alcohol, n-pentyl alcohol, n-octyl alcohol, nonyl alcohol, decyl alcohol, lauryl alcohol, tridecyl alcohol, myristyl alcohol, cetyl alcohol, and stearyl alcohol], (ii) alicyclic monools [such as cyclohexyl alcohol], and (iii) aromatic aliphatic monools [such as benzyl alcohol], and mixtures of two or more thereof.

(b32) Poly(n = 2 to 30)oxyalkylene(having 2 to 4 carbon atoms)alkyl(having 1 to 18 carbon atoms)ether (meth)acrylate [such as methanol ethylene oxide (hereinafter abbreviated to EO) 10 mol adduct (meth)acrylate and methanol propylene oxide (hereinafter abbreviated to PO) 10 mol adduct (meth)acrylate].

(b33) Nitrogen-containing vinyl compound

(b33-1) Amide group-containing vinyl compound

(i) (meth)acrylamide compounds having 3 to 30 carbon atoms, such as N,N-dialkyl(having 1 to 6 carbon atoms)- or diaralkyl(having 7 to 15 carbon atoms) (meth)acrylamide [such as N,N-dimethylacrylamide, and N,N-dibenzylacrylamide], and diacetone acrylamide

(ii) amide group-containing vinyl compound having 4 to 20 carbon atoms excluding the (meth)acrylamide compounds, such as N-methyl-N-vinylacetamide, and cyclic amides (pyrrolidone compounds (having 6 to 13 carbon atoms, such as N-vinylpyrrolidone))

(b33-2) (Meth)acrylate compounds

(i) dialkyl(having 1 to 4 carbon atoms)aminoalkyl(having 1 to 4 carbon atoms) (meth)acrylate [such as N,N-dimethylaminoethyl (meth)acrylate, N,N-diethylaminoethyl (meth)acrylate, t-butylaminoethyl (meth)acrylate, and morpholinoethyl (meth)acrylate]

(ii) (meth)acrylates containing a quaternary ammonium group [such as quaternized compounds (through quaternization with a quaternizing agent) of tertiary amino group-containing (meth)acrylates [such as N,N-dimethylaminoethyl (meth)acrylate, and N,N-diethylaminoethyl (meth)acrylate]]

(b33-3) Heterocycle-containing vinyl compound
pyridine compounds (having 7 to 14 carbon atoms, such as 2- and 4-vinylpyridine), imidazole compounds (having 5 to 12 carbon atoms, such as N-vinylimidazole), pyrrole compounds (having 6 to 13 carbon atoms, such as N-vinylpyrrole), and pyrrolidone compounds (having 6 to 13 carbon atoms, such as N-vinyl-2-pyrrolidone)

(b33-4) Nitrile group-containing vinyl compound
nitrile group-containing vinyl compounds having 3 to 15 carbon atoms, such as (meth)acrylonitrile, cyanostyrene, and cyanoalkyl (having 1 to 4 carbon atoms) acrylate

(b33-5) Other vinyl compounds
nitro group-containing vinyl compounds (having 8 to 16 carbon atoms, such as nitrostyrene)

(b34) Vinyl hydrocarbon

(b34-1) Aliphatic vinyl hydrocarbon
olefins having 2 to 18 or more carbon atoms [such as ethylene, propylene, butene, isobutylene, pentene, heptene, diisobutylene, octene, dodecene, and octadecene], and dienes having 4 to 10 or more carbon atoms [such as butadiene, isoprene, 1,4-pentadiene, 1,5-hexadiene, and 1,7-octadiene]

(b34-2) Alicyclic vinyl hydrocarbon
cyclic unsaturated compounds having 4 to 18 or more carbon atoms, such as cycloalkenes (such as cyclohexene), (di)cycloalkadienes [such as (di)cyclopentadiene], and terpenes (such as pinene, limonene, and indene)

(b34-3) Aromatic vinyl hydrocarbon
aromatic unsaturated compounds having 8 to 20 or more carbon atoms and derivatives thereof, such as styrene, $\alpha$-methylstyrene, vinyltoluene, 2,4-dimethylstyrene, ethylstyrene, isopropylstyrene, butylstyrene, phenylstyrene, cyclohexylstyrene, benzylstyrene, and lithium styrenesulfonate

(b35) Vinyl ester, vinyl ether, vinyl ketone, unsaturated dicarboxylic acid diester

(b35-1) Vinyl ester
aliphatic vinyl esters [having 4 to 15 carbon atoms, such as alkenyl esters of aliphatic carboxylic acids (mono- and dicarboxylic acids) (such as vinyl acetate, vinyl propionate, vinyl butyrate, diallyl adipate, isopropenyl acetate, and vinylmethoxy acetate)]
aromatic vinyl esters [having 9 to 20 carbon atoms, such as alkenyl esters of aromatic carboxylic acids (mono- and dicarboxylic acids) (such as vinyl benzoate, diallyl phthalate, and methyl-4-vinyl benzoate), and aromatic ring-containing esters of aliphatic carboxylic acids (such as acetoxystyrene)]

(b35-2) Vinyl ether
aliphatic vinyl ethers [having 3 to 15 carbon atoms, such as vinyl alkyl (having 1 to 10 carbon atoms) ethers [such as vinyl methyl ether, vinyl butyl ether, and vinyl 2-ethylhexyl ether]; vinyl alkoxy(having 1 to 6 carbon atoms)alkyl(having 1 to 4 carbon atoms) ethers [such as vinyl-2-methoxyethyl ether, methoxybutadiene, 3,4-dihydro-1,2-pyran, 2-butoxy-2'-vinyloxydiethyl ether, and vinyl-2-ethylmercaptoethyl ether]; and poly(2 to 4)(meth)allyloxyalkane (having 2 to 6 carbon atoms) [such as diallyloxyethane, triallyloxyethane, tetraallyloxybutane, and tetramethallyloxyethane]]
aromatic vinyl ethers (having 8 to 20 carbon atoms, such as vinyl phenyl ether and phenoxystyrene)

(b35-3) Vinyl ketone
aliphatic vinyl ketones (having 4 to 25 carbon atoms, such as vinyl methyl ketone and vinyl ethyl ketone)
aromatic vinyl ketones (having 9 to 21 carbon atoms, such as vinyl phenyl ketone)

(b35-4) Unsaturated dicarboxylic acid diester
unsaturated dicarboxylic acid diesters having 4 to 34 carbon atoms, such as dialkyl fumarate (where two alkyl groups are linear, branched, or alicyclic groups having 1 to 22 carbon atoms), and dialkyl maleate (where two alkyl groups are linear, branched, or alicyclic groups having 1 to 22 carbon atoms)

Among these copolymerizable vinyl monomers (b3) exemplified above, preferred are copolymerizable vinyl monomers (b31), (b32), (b33), and (b34), and more preferred are methyl (meth)acrylate, ethyl (meth)acrylate, and butyl (meth)acrylate of the monomers (b31) and lithium styrenesulfonate of the monomers (b34) in view of absorption of the electrolyte solution and withstand voltage.

In the polymer (B), the contents of the vinyl monomer (b1) having a carboxyl group, the vinyl monomer (b2) represented by Formula (1), and the copolymerizable vinyl monomer (b3) containing no active hydrogen are desirably 0.1 to 80% by weight, 0.1 to 99.9% by weight, and 0 to 99.8% by weight, respectively, relative to the weight of the polymer (B).

When the contents of monomers are within these ranges, preferable absorption of the electrolyte solution is attained.

More desirable contents of the vinyl monomers (b1), (b2), and (b3) are 30 to 60% by weight, 5 to 60% by weight, and 5 to 80% by weight, respectively. Still more desirable contents thereof are 35 to 50% by weight, 15 to 45% by weight, and 20 to 60% by weight, respectively.

The lower limit of the number average molecular weight of the polymer (B) is preferably 3,000, more preferably 50,000, particularly preferably 100,000, most preferably 200,000. The upper limit is preferably 2,000,000, more preferably 1,500,000, particularly preferably 1,000,000, most preferably 800,000.

The number average molecular weight of the polymer (B) can be determined by gel permeation chromatography (GPC) on the following conditions:

apparatus: Alliance GPC V2000 (manufactured by Waters Corporation)

solvent: ortho-dichlorobenzene

standard substance: polystyrene

sample concentration: 3 mg/ml

column stationary phase: two columns of PLgel 10 $\mu$m and MIXED-B (manufactured by Polymer Laboratories Ltd.) connected in series

column temperature: 135°C

The polymer (B) desirably has a solubility parameter (SP value) of 9.0 to 20.0 $(cal/cm^3)^{1/2}$. The SP value of the polymer (B) is more desirably 9.5 to 18.0 $(cal/cm^3)^{1/2}$, still more desirably 9.5 to 14.0 $(cal/cm^3)^{1/2}$. An SP value of the polymer (B) of 9.0 to 20.0 $(cal/cm^3)^{1/2}$ is preferred in view of absorption of the electrolyte solution.

The glass transition temperature of the polymer (B) [hereinafter abbreviated to Tg, method for measurement: differential scanning calorimetry (DSC)] is preferably 80 to 200°C, more preferably 90 to 180°C, particularly preferably 100 to 150°C in view of the heat resistance of the battery.

The polymer (B) can be produced by a known polymerization method (such as bulk polymerization, solution polymerization, emulsion polymerization, or suspension polymerization).

Polymerization can be performed using a known polymerization initiator [such as an azo initiator such as 2,2'-azobis(2-methylpropionitrile) or 2,2'-azobis(2,4-dimethylvaleronitrile), or a peroxide initiator such as benzoyl peroxide, di-t-butyl peroxide, or lauryl peroxide].

The amount of the polymerization initiator to be used is preferably 0.01 to 5% by weight, more preferably 0.05 to 2% by weight relative to the total weight of the monomers.

Examples of the solvent used in solution polymerization include esters (having 2 to 8 carbon atoms, such as ethyl acetate and butyl acetate), alcohols (having 1 to 8 carbon atoms, such as methanol, ethanol, and octanol), hydrocarbons (having 4 to 8 carbon atoms, such as n-butane, cyclohexane, and toluene), amides (such as DMF and dimethylacetamide), and ketones (having 3 to 9 carbon atoms, such as methyl ethyl ketone). The amount thereof to be used is usually 5 to 900%, preferably 10 to 400% relative to the total weight of the monomers. The concentration of the monomers is usually 10 to 95% by weight, preferably 20 to 90% by weight.

Examples of the dispersive medium used in emulsion polymerization and suspension polymerization include water, alcohols (such as ethanol), esters (such as ethyl propionate), and light naphtha. Examples of the emulsifier include higher fatty acid (having 10 to 24 carbon atoms) metal salts (such as sodium oleate and sodium stearate), higher alcohol (having 10 to 24 carbon atoms) sulfuric acid ester metal salts (such as sodium lauryl sulfate), ethoxylated tetramethyldecynediol, sulfoethyl sodium methacrylate, and dimethylaminomethyl methacrylate. A stabilizer such as poly(vinyl alcohol) or polyvinylpyrrolidone may be further added.

The monomer concentration in a solution or a dispersion is usually 5 to 95% by weight. The amount of the polymerization initiator to be used is usually 0.01 to 5%, preferably 0.05 to 2% relative to the total weight of the monomers in view of tackiness and aggregation force.

Polymerization can be performed using a known chain transfer agent, such as a mercapto compound (such as dodecylmercaptan or n-butylmercaptan) and halogenated hydrocarbon (such as carbon tetrachloride, carbon tetrabromide, or benzyl chloride). The amount thereof to be used is usually 2% or less, preferably 0.5% or less relative to the total weight of the monomers in view of tackiness and aggregation force.

The inner temperature of the system in the polymerization reaction is usually -5 to 150°C, preferably 30 to 120°C. The reaction time is usually 0.1 to 50 hours, preferably 2 to 24 hours. The end point of the reaction can be confirmed from the amount of the non-reacted monomer when the amount reaches usually 5% by weight or less, preferably 1% by weight or less of the total amount of the monomers used.

The resin for coating an active material for lithium ion batteries used according to the present invention may be a crosslinked polymer prepared by crosslinking the polymer (B) with a polyepoxy compound (c1) and/or a polyol compound (c2).

In the crosslinked polymer, the polymer (B) is desirably crosslinked using a crosslinking agent (C) having a reactive functional group reactive with active hydrogen in the polymer (B), such as a carboxyl group. The crosslinking agent (C) to be used is more desirably a polyepoxy compound (c1) and/or a polyol compound (c2).

Examples of the polyepoxy compound (c1) include compounds having an epoxy equivalent of 80 to 2,500, such as glycidyl ether [such as bisphenol A diglycidyl ether, bisphenol F diglycidyl ether, pyrogallol triglycidyl ether, ethylene glycol diglycidyl ether, propylene glycol diglycidyl ether, neopentyl glycol diglycidyl ether, trimethylolpropane triglycidyl ether, glycerol triglycidyl ether, polyethylene glycol (Mw: 200 to 2,000) diglycidyl ether, polypropylene glycol (Mw: 200 to 2,000) diglycidyl ether, and diglycidyl ethers of alkylene oxide 1 to 20 mol adducts of bisphenol A]; glycidyl esters (such as phthalic acid diglycidyl ester, trimellitic acid triglycidyl ester, dimer acid diglycidyl ester, and adipic acid diglycidyl ester); glycidylamines (such as N,N-diglycidylaniline, N,N-diglycidyltoluidine, N,N,N',N'-tetraglycidyldiaminodiphenylmethane, N,N,N',N'-tetraglycidylxylylenediamine, 1,3-bis(N,N-diglycidylaminomethyl)cyclohexane, and N,N,N',N'-tetraglycidylhexamethylenediamine); aliphatic epoxides (such as epoxidized polybutadiene and epoxidized soybean oil); and alicyclic epoxides (such as limonene dioxide and dicyclopentadiene dioxide).

Examples of the polyol compound (c2) include low molecular polyvalent alcohols [such as aliphatic and alicyclic diols having 2 to 20 carbon atoms [such as EG, DEG, propylene glycol, 1,3-butylene glycol, 1,4-BG, 1,6-hexanediol, 3-methylpentanediol, neopentyl glycol, 1,9-nonanediol, 1,4-dihydroxycyclohexane, 1,4-bis(hydroxymethyl)cyclohexane, and 2,2-bis(4,4'-hydroxycyclohexyl)propane]; aromatic ring-containing diols having 8 to 15 carbon atoms [such as m- and p-xylylene glycols, and 1,4-bis(hydroxyethyl)benzene]; triols having 3 to 8 carbon atoms (such as glycerol and trimethylolpropane); tetra- or higher valent alcohols [such as pentaerythritol, $\alpha$-methylglucoside, sorbitol, xilite, mannite, glucose, fructose, sucrose, dipentaerythritol, and polyglycerol (degree of polymerization: 2 to 20)]], and alkylene (having 2 to 4 carbon atoms) oxide adducts (degree of polymerization: 2 to 30) thereof.

In view of absorption of the electrolyte solution, the crosslinking agent (C) is used in an amount such that the equivalent ratio of an active hydrogen-containing group in the polymer (B) to the reactive functional group in the crosslinking agent (C) is preferably 1:0.01 to 1:2, more preferably 1:0.02 to 1:1.

Examples of the method of crosslinking the polymer (B) with the crosslinking agent (C) include a method involving coating the active material for lithium ion batteries with a coating resin including the polymer (B), and then crosslinking the polymer (B). Specifically, an exemplary method of crosslinking the polymer (B) with the crosslinking agent (C) is performed as follows: The active material for lithium ion batteries is mixed with a resin solution containing the polymer (B), and the solvent is removed to produce a coated active material, which is the active material for lithium ion batteries coated with the resin. A solution containing the crosslinking agent (C) is then mixed with the coated active material, and the mixture is heated to remove the solvent and make the crosslinking reaction, so that the active material for lithium ion batteries is coated with the crosslinked polymer.

The heating temperature is desirably 70°C or more in the presence of the polyepoxy compound (c1) as the crosslinking agent, and is desirably 120°C or more in the presence of the polyol compound (c2).

Further described but not used as resin for coating an active material for lithium ion batteries according to the present invention is a fluorinated resin (D).

Examples of the fluorinated resin (D) include one or more (co)polymers of fluorine-containing monomers, such as fluorinated olefins having 2 to 10 carbon atoms and 1 to 20 fluorine atoms (such as tetrafluoroethylene, hexafluoropropylene, and perfluorohexylethylene), and fluorinated alkyl (having 1 to 10 carbon atoms) (meth)acrylates [such as perfluorohexylethyl (meth)acrylate and perfluorooctylethyl (meth)acrylate].

Further described but not used as resin for coating an active material for lithium ion batteries according to the present invention is a polyester resin (E).

Examples of the polyester resin (E) include polycondensates of polyols and polycarboxylic acids.

Examples of the polyols include diols (e1) and tri- or higher valent polyols (e2). Examples of the polycarboxylic acids include dicarboxylic acid (e3) and tri- or higher valent polycarboxylic acids (e4). Among these resins, preferred are non-linear polyester resins prepared from the diols (e1) and the dicarboxylic acids (e3) with the tri- or higher valent polyols (e2) and/or the tri- or higher valent polycarboxylic acids (e4), and particularly preferred are polyester resins composed of the four components (e1), (e2), (e3), and (e4).

Examples of the diols (e1) include alkylene glycol (such as ethylene glycol, 1,2-propylene glycol, 1,3-propylene glycol, 1,4-butanediol, 1,6-hexanediol, and dodecanediol); alkylene ether glycol (such as DEG, triethylene glycol, dipropylene glycol, PEG, poly(oxypropylene)glycol, and PTMG); alicyclic diols (such as 1,4-cyclohexanedimethanol, hydrogenated bisphenol A, and hydrogenated bisphenol F); bisphenols (such as bisphenol A, bisphenol F, and bisphenol S); alkylene oxide (such as EO, PO, butylene oxide, styrene oxide, and $\alpha$-olefin oxide) adducts of the alicyclic diols; and alkylene oxide (such as EO, PO, butylene oxide, styrene oxide, and $\alpha$-olefin oxide) adducts of the bisphenols. Among these diols, preferred are alkylene glycols having 6 or more carbon atoms, alkylene oxide adducts of bisphenols, and alicyclic diols, and particularly preferred are PO, butylene oxide, styrene oxide, and $\alpha$-olefin oxide adducts of bisphenols, alkylene glycols having 8 or more carbon atoms, hydrogenated bisphenol A, hydrogenated bisphenol F, and combinations thereof.

Examples of the tri- or higher valent polyols (e2) include trivalent to octavalent or higher valent aliphatic alcohols (such as glycerol, trimethylolethane, trimethylolpropane, pentaerythritol, and sorbitol); trisphenols (such as trisphenol PA); novolak resins (such as phenol novolak and cresol novolak); alkylene oxide adducts of the trisphenols; and alkylene oxide adducts of the novolak resins. Among these polyols, preferred are the trivalent to octavalent or higher valent aliphatic alcohols and the alkylene oxide adducts of the novolak resins, and particularly preferred are the alkylene oxide adducts of the novolak resins.

Examples of the dicarboxylic acids (e3) include alkylene dicarboxylic acids (such as succinic acid, adipic acid, azelaic acid, sebacic acid, dodecane dicarboxylic acid, octadecane dicarboxylic acid, dodecenylsuccinic acid, pentadecenylsuccinic acid, octadecenylsuccinic acid, and dimer acid); alkenylene dicarboxylic acids (such as maleic acid and fumaric acid); and aromatic dicarboxylic acids (such as phthalic acid, isophthalic acid, terephthalic acid, and naphthalenedicarboxylic acid). Among these dicarboxylic acids, preferred are alkylene dicarboxylic acids having 6 to 50 carbon atoms, alkenylene dicarboxylic acids having 6 to 50 carbon atoms, aromatic dicarboxylic acids having 8 to 20 carbon atoms, and combinations thereof, more preferred are alkylene dicarboxylic acids having 7 to 50 carbon atoms, and combinations thereof with aromatic dicarboxylic acids having 8 to 20 carbon atoms, and particularly preferred are alkenylsuccinic acids having 16 to 50 carbon atoms and combinations thereof with aromatic dicarboxylic acids having 8 to 20 carbon atoms.

Examples of the tri- or higher valent polycarboxylic acids (e4) include aromatic polycarboxylic acids having 9 to 20 carbon atoms (such as trimellitic acid and pyromellitic acid), and vinyl polymers of unsaturated carboxylic acids (such as styrene/maleic acid copolymers, styrene/acrylic acid copolymers, $\alpha$-olefin/maleic acid copolymers, and styrene/fumaric acid copolymers). Among these polycarboxylic acids, preferred are aromatic polycarboxylic acids having 9 to 20 carbon atoms, and particularly preferred is trimellitic acid.

Acid anhydrides or lower alkyl esters (such as methyl ester, ethyl ester, and isopropyl ester) of the acids listed above may be used as the dicarboxylic acid (e3) or the tri- or higher valent polycarboxylic acids (e4).

A hydroxy carboxylic acid (e5) can be copolymerized with the components (e1), (e2), (e3), and (e4). Examples of the hydroxy carboxylic acid (e5) include hydroxy stearic acids and hard castor oil fatty acids.

For the ratio of the polyol to the polycarboxylic acid, the equivalent ratio of the hydroxyl group [OH] to the carboxyl group [COOH], [OH]/[COOH], is usually 2/1 to 1/2, preferably 1.5/1 to 1/1.5, more preferably 1.3/1 to 1/1.3. For the proportion of the tri- or higher valent polyol (e2) and the tri- or higher valent polycarboxylic acid (e4), the sum of the numbers of moles of the polyol (e2) and the polycarboxylic acid (e4) is usually 0 to 40 mol%, preferably 3 to 25 mol%, more preferably 5 to 20 mol% relative to the total of the numbers of moles of the components (e1) to (e4). The molar ratio of the polyol (e2) to the dicarboxylic acid (e3) is usually 0/100 to 100/0, preferably 80/20 to 20/80, more preferably 70/30 to 30/70.

The polyester resin (E) preferably has a number average molecular weight of 2,000 to 50,000 in view of absorption of the electrolyte solution.

The number average molecular weight of the polyester resin (E) is determined by GPC. A GPC measurement for determination of the number average molecular weight of the polyester resin (E) is performed, for example, on the following conditions:

apparatus: HLC-8220 GPC (liquid chromatograph manufactured by Tosoh Corporation)

columns: TSK gel Super H4000 + TSK gel Super H3000 + TSK gel Super H2000 (all of which are manufactured by Tosoh Corporation)

column temperature: 40°C

detector: RI (Refractive Index)

solvent: tetrahydrofuran

flow rate: 0.6 ml/min

sample concentration: 0.25% by weight

amount of injection: 10 μl

standard: polystyrene (manufactured by Tosoh Corporation; TSK STANDARD POLYSTYRENE)

The polyester resin (E) is prepared through dehydration condensation of the polycarboxylic acid and the polyol by heating the polycarboxylic acid and the polyol to 150 to 280°C in the presence of a known esterification catalyst such as tetrabutoxytitanate or dibutyltin oxide. A reduction in pressure is also effective to enhance the reaction rate during the final period of the reaction.

Further described but not used as resin for coating an active material for lithium ion batteries according to the present invention is a polyether resin (F).

Examples of the polyether resin (F) include polyoxyalkylene glycols [degree of polymerization of oxyalkylene: 2 to 100 (degree of polymerization of oxyethylene is preferably 5 to 30, and the oxyalkylene preferably has 2 to 4 carbon atoms. The same applied to the following polyether resin) such as polyoxyethylene (degree of polymerization: 20)/polyoxypropylene (degree of polymerization: 20) block copolymers (such as Pluronic types)], polyoxyalkylene alkyl ether (oxyalkylene having a degree of polymerization of 2 to 100, alkyl having 8 to 40 carbon atoms) (such as octyl alcohol EO 20 mol adducts, lauryl alcohol EO 20 mol adducts, stearyl alcohol EO 10 mol adducts, oleyl alcohol EO 5 mol adducts, and lauryl alcohol EO 10 mol-PO 20 mol block adducts); polyoxyalkylene higher fatty acid esters (oxyalkylene having a degree of polymerization of 2 to 100, higher fatty acids having 8 to 40 carbon atoms) (such as stearyl acid EO 10 mol adducts and lauric acid EO 10 mol adducts); polyoxyalkylene polyvalent alcohol higher fatty acid esters (oxyalkylene having a degree of polymerization of 2 to 100, polyvalent alcohol having 2 to 40 carbon atoms, higher fatty acid having 8 to 40 carbon atoms) (such as lauric acid diesters of polyethylene glycol (degree of polymerization: 20), and oleic acid diesters of polyethylene glycol (degree of polymerization: 20)); polyoxyalkylene alkylphenyl ether (oxyalkylene having a degree of polymerization of 2 to 100, alkyl having 8 to 40 carbon atoms) (such as nonylphenol EO 4 mol adducts, nonylphenol EO 8 mol-PO 20 mol block adducts, octylphenol EO 10 mol adducts, bisphenol A/EO 10 mol adducts, and styrenated phenol EO 20 mol adducts); polyoxyalkylene alkylaminoether (oxyalkylene having a degree of polymerization of 2 to 100, alkyl having 8 to 40 carbon atoms) (such as lauryl amine EO 10 mol adducts and stearyl amine EO 10 mol adducts); polyoxyalkylene alkanolamides (oxyalkylene having a degree of polymerization of 2 to 100, amide (acyl moiety) having 8 to 24 carbon atoms) (such as EO 10 mol adducts of hydroxyethyl lauric acid amide and EO 20 mol adducts of hydroxypropyl oleamide). These may be used in combinations of two or more.

Further described but not used as resin for coating an active material for lithium ion batteries according to the present invention is a polyamide resin (G).

Any polyamide resin (G) can be used. A desirable polyamide resin (G) is a resin prepared through condensation polymerization of a polymerized fatty acid (g1) containing at least 40% by weight of tribasic acid having 54 carbon atoms, an aliphatic monocarboxylic acid (g2) having 2 to 4 carbon atoms, and a polyamine (g3) including ethylenediamine and an aliphatic polyamine having 3 to 9 carbon atoms.

Examples of the polymerized fatty acid (g1) include residue left after an unsaturated fatty acid, such as oleic acid or linoleic acid, or a lower alkyl ester thereof (having 1 to 3 carbon atoms) is polymerized, and a valuable dibasic acid component having 36 carbon atoms is then extracted through distillation, the residue being called trimer acid. The trimer acid includes the following composition, for example:

monobasic acid having 18 carbon atoms: 0 to 5% by weight (preferably 0 to 2% by weight)

dibasic acid having 36 carbon atoms: less than 60% by weight (preferably less than 50% by weight)

tribasic acid having 54 carbon atoms: 40% by weight or more (preferably 50% by weight or more).

Part of the polymerized fatty acid (g1) may be replaced by a different tribasic acid or a tetrabasic acid when necessary. Examples of the different tribasic acid or the tetrabasic acid include trimellitic acid, pyromellitic acid, benzophenonetetracarboxylic acid, and butanetetracarboxylic acid (including acid anhydrides thereof and alkyl (having 1 to 3 carbon atoms) esters).

Examples of the aliphatic monocarboxylic acid (g2) having 2 to 4 carbon atoms include acetic acid, propionic acid, and butyric acid. These can be used singly or in the form of a mixture in any proportion.

The amount of the aliphatic monocarboxylic acid (g2) to be used is usually 20 to 40 equivalent%, preferably 30 to 40 equivalent% of the total carboxylic acid component [(g1) + (g2)].

Examples of the aliphatic polyamine having 3 to 9 carbon atoms, which forms the polyamine (g3), include diethylenetriamine, propylenediamine, diaminobutane, hexamethylenediamine, trimethylhexamethylenediamine, iminobispropylamine, and methyliminobispropylamine. The polyamine (g3) is a mixture of ethylenediamine and one or more aliphatic polyamines having 3 to 9 carbon atoms. The proportion of ethylenediamine in the polyamine (g3) is usually 60 to 85 equivalent%, preferably 70 to 80 equivalent%.

The number average molecular weight of the polyamide resin (G) is usually 3,000 to 50,000, preferably 5,000 to 10,000.

The number average molecular weight of the polyamide resin (G) can be determined through a GPC measurement on the following conditions:

apparatus: HLC-802A (manufactured by Tosoh Corporation)

columns: two columns of TSK gel GMH6 (manufactured by Tosoh Corporation)

temperature for measurement: 40°C

sample solution: 0.25% by weight of DMF solution

amount of solution to be injected: 200 μl

detector: RI

standard: polystyrene (manufactured by Tosoh Corporation; TSK STANDARD POLYSTYRENE)

The melting point of the polyamide resin (G) determined by a micro melting point measurement method (measured with a melting point measurement apparatus in accordance with a melting point measurement method specified in JIS K0064-1992, 3.2) is preferably 100 to 150°C, more preferably 120 to 130°C in view of the heat resistance of the battery.

The polyamide resin (G) can be produced by the same method as a standard method of producing a polymerized fatty acid-based polyamide resin. The reaction temperature of the amidizing condensation polymerization reaction is usually 160 to 250°C, preferably 180 to 230°C. The reaction is preferably performed in an inert gas such as nitrogen gas to prevent coloring of the resin. The reaction may be performed under reduced pressure during the final period of the reaction to terminate the reaction or promote removal of volatile components. The reaction product can be diluted into a solution with an alcohol solvent such as methanol, ethanol, or isopropanol, after the amidizing condensation polymerization reaction.

Further described but not used as resin for coating an active material for lithium ion batteries according to the present invention is any other resin (H) having a liquid absorbing rate of 10% or more when the resin is immersed in the electrolyte solution, and a tensile elongation at break of 10% or more when the resin is saturated with the electrolyte solution. Examples of such usable resins (H) include epoxy resins, polyimide resins, silicone resins, phenol resins, melamine resins, urea resins, aniline resins, ionomer resins, and polycarbonates.

The resin composition for coating an active material for lithium ion batteries used according to the present invention includes a resin for coating an active material for lithium ion batteries and a conductive additive (X).

The resin composition for coating an active material for lithium ion batteries used according to the present invention contains the above-mentioned resin for coating an active material for lithium ion batteries.

The conductive additive (X) is selected from conductive materials.

Specific examples of the conductive materials include, but should not be limited to, metals {such as aluminum, stainless steel (SUS), silver, gold, copper, and titanium}, carbon {such as graphite and carbon black [such as acetylene black, ketjen black, furnace black, channel black, and thermal lamp black]}, and mixtures thereof.

These conductive additives (X) can be used singly or in combinations of two or more. Alloys or metal oxides thereof can also be used. In view of electrical stability, preferred are aluminum, stainless steel, carbon, silver, gold, copper, titanium, and mixtures thereof, more preferred are silver, gold, aluminum, stainless steel, and carbon, and particularly preferred is carbon. These conductive additives (X) may be particulate ceramic materials and resin materials coated with conductive materials (metals of the conductive additives (X) listed above) by plating, for example.

The shape (form) of the conductive additive (X) is not limited to the form of particles, and may be of any other form practically used as a filler conductive resin composition, such as carbon nanotubes.

The conductive additive (X) can have any average particle size. In view of electrical characteristics of the battery, the average particle size is preferably about 0.01 to 10 μm. Throughout the specification, the term "particle size" refers to the longest distance L of distances between two points on the outline of a particle of the conductive additive (X). The "average particle size" is defined as a value calculated as the average of the particle sizes of the particles observed in several to several tens of viewing fields with an observation means such as a scanning electron microscope (SEM) or a transmission electron microscope (TEM).

The resin for coating an active material for lithium ion batteries and the conductive additive (X) can be compounded in any proportion. The weight ratio of the resin for coating an active material for lithium ion batteries (weight of the resin solid content) to the conductive additive (X) is desirably 1:0.2 to 1:3.0.

The resin composition for coating an active material for lithium ion batteries used according to the present invention can be produced by mixing the resin for coating an active material for lithium ion batteries according to the present invention with the conductive additive (X). This premixed resin composition for coating an active material for lithium ion batteries can be further mixed with an active material for lithium ion batteries to coat the active material for lithium ion batteries with the resin composition for coating an active material for lithium ion batteries.

In coating of the active material for lithium ion batteries with the resin composition for coating an active material

15

for lithium ion batteries, the resin for coating an active material for lithium ion batteries, the active material for lithium ion batteries, and the conductive additive (X) can be simultaneously mixed and be formed, on the surface of the active material for lithium ion batteries, into a resin composition for coating an active material for lithium ion batteries containing the resin for coating an active material for lithium ion batteries and the conductive additive (X).

In coating of the active material for lithium ion batteries with the resin composition for coating an active material for lithium ion batteries, the active material for lithium ion batteries can be mixed with the resin for coating an active material for lithium ion batteries, and further mixed with the conductive additive (X) to be formed, on the surface of the active material for lithium ion batteries, into a resin composition for coating an active material for lithium ion batteries containing the resin for coating an active material for lithium ion batteries and the conductive additive (X).

The coated active material for lithium ion batteries according to the present invention is a coated active material for lithium ion batteries including the resin composition for coating an active material for lithium ion batteries and an active material for lithium ion batteries (Y), wherein the surface of the active material for lithium ion batteries (Y) is partially or entirely coated with the resin composition for coating an active material for lithium ion batteries.

Examples of the active material for lithium ion batteries (Y) include a positive electrode active material (Y1) and a negative electrode active material (Y2).

Examples of the positive electrode active material (Y1) include complex oxides of lithium and transition metals (such as $LiCoO_2$, $LiNiO_2$, $LiMnO_2$, and $LiMn_2O_4$), transition metal oxides (such as $MnO_2$ and $V_2O_5$), transition metal sulfides (such as $MoS_2$ and $TiS_2$), and conductive polymers (such as polyaniline, poly(vinylidene fluoride), polypyrrole, polythiophene, polyacetylene, poly-p-phenylene, and polycarbazole).

Examples of the negative electrode active material (Y2) include graphite, amorphous carbon, burned high-molecular compounds (such as phenol resins and furan resins burned into carbon), cokes (such as pitch cokes, needle cokes, and petroleum cokes), carbon fibers, conductive polymers (such as polyacetylene and polypyrrole), tin, silicon, and metal alloys (such as lithium-tin alloys, lithium-silicon alloys, lithium-aluminum alloys, and lithium-aluminum-manganese alloys).

The coated active material for lithium ion batteries according to the present invention can be prepared, for example, as follows: While the active material for lithium ion batteries (Y) is being stirred at 30 to 500 rpm in an all-purpose mixer, a resin solution containing the resin for coating an active material for lithium ion batteries is dropped into the active material over 1 to 90 minutes and mixed therewith. The conductive additive (X) is further mixed. The mixed solution is heated to 50 to 200°C under stirring. The pressure is reduced to 0.007 to 0.04 MPa, and then is kept for 10 to 150 minutes.

The active material for lithium ion batteries (Y) and the resin composition for coating an active material for lithium ion batteries can be compounded in any proportion. The weight ratio of the active material for lithium ion batteries (Y) to the resin composition for coating an active material for lithium ion batteries is desirably 1:0.001 to 1:0.1.

The electrode containing the coated active material for lithium ion batteries according to the present invention can be prepared as follows: The coated active material for lithium ion batteries, a binder, and when necessary the conductive additive (X) are dispersed in water or a solvent in a concentration of 30 to 60% by weight relative to the weight of the water or the solvent to prepare a slurry-like dispersion. The dispersion is applied onto a current collector with an applicator such as a bar coater, and is dried to remove the water or the solvent. When necessary, the current collector is pressed with a press.

If the active material for lithium ion batteries (Y) used is the positive electrode active material (Y1), a positive electrode for lithium ion batteries is prepared. If the active material for lithium ion batteries (Y) used is the negative electrode active material (Y2), a negative electrode for lithium ion batteries is prepared.

Examples of the solvent include 1-methyl-2-pyrrolidone, methyl ethyl ketone, DMF, dimethylacetamide, N,N-dimethylaminopropylamine, and tetrahydrofuran.

Examples of the current collector include copper, aluminum, titanium, stainless steel, nickel, burned carbon, conductive polymers, and conductive glass.

Examples of the binder include high-molecular compounds such as starch, poly(vinylidene fluoride), poly(vinyl alcohol), carboxymethyl cellulose, polyvinylpyrrolidone, tetrafluoroethylene, styrene-butadiene rubber, polyethylene, and polypropylene.

The lithium ion battery including the electrode containing the coated active material for lithium ion batteries according to the present invention is prepared as follows: The electrode is combined with its counter electrode, and this combination is accommodated together with a separator in a cell case. An electrolyte solution is injected into the cell case, and the cell case is sealed.

Moreover, the lithium ion battery including the electrode containing the coated active material for lithium ion batteries according to the present invention is also prepared as follows: A positive electrode is formed on one surface of a current collector, and a negative electrode is formed on the other surface of the current collector to prepare a bipolar electrode. The bipolar electrode and a separator are formed into a laminate. The laminate is accommodated in a cell case, and an electrolyte solution is injected into the cell case. The cell case is sealed.

A lithium ion battery may be prepared with the positive electrode and the negative electrode both containing the respective coated active materials for lithium ion batteries according to the present invention.

Examples of the separator include microporous membranes made of polyethylene films and polypropylene films, multi-layer films of porous polyethylene films and porous polypropylene films, non-woven fabrics made of polyester fibers, aramid fibers, and glass fibers, and these non-woven fabrics having surfaces to which ceramic nanoparticles such as silica, alumina, and titania attach.

Examples of usable electrolyte solutions include electrolyte solutions containing electrolytes and non-aqueous solvents, which are used for production of lithium ion batteries.

Electrolytes used for typical electrolyte solutions can be used. Examples thereof include lithium salts of inorganic acids such as $LiPF_6$, $LiBF_4$, $LiSbF_6$, $LiAsF_6$, and $LiClO_4$ and lithium salts of organic acids such as $LiN(CF_3SO_2)_2$, $LiN(C_2F_5SO_2)_2$, and $LiC(CF_3SO_2)_3$. Among these electrolytes, preferred is $LiPF_6$ in view of the output power of the battery and the charge and discharge cycle characteristics thereof.

Non-aqueous solvents used for typical electrolyte solutions can be used. Examples thereof include lactone compounds, cyclic or linear carbonic acid esters, linear carboxylic acid esters, cyclic or linear ethers, phosphoric acid esters, nitrile compounds, amide compounds, sulfones, sulfolane, and mixtures thereof.

Examples of the lactone compounds can include 5-membered ring lactone compounds (such as γ-butyrolactone and γ-valerolactone) and 6-membered ring lactone compounds (such as δ-valerolactone).

Examples of the cyclic carbonic acid esters include propylene carbonate, ethylene carbonate, and butylene carbonate.

Examples of the linear carbonic acid esters include dimethyl carbonate, methyl ethyl carbonate, diethyl carbonate, methyl-n-propyl carbonate, ethyl-n-propyl carbonate, and di-n-propyl carbonate.

Examples of the linear carboxylic acid esters include methyl acetate, ethyl acetate, propyl acetate, and methyl propionate.

Examples of the cyclic ethers include tetrahydrofuran, tetrahydropyran, 1,3-dioxolane, and 1,4-dioxane.

Examples of the linear ethers include dimethoxymethane and 1,2-dimethoxyethane.

Examples of the phosphoric acid esters include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphospholane-2-one, 2-trifluoroethoxy-1,3,2-dioxaphospholane-2-one, and 2-methoxyethoxy-1,3,2-dioxaphospholane-2-one.

Examples of the nitrile compounds include acetonitriles. Examples of the amide compounds include DMF. Examples of the sulfones include dimethyl sulfone and diethyl sulfone.

These non-aqueous solvents can be used singly or in combinations of two or more.

Among these non-aqueous solvents, preferred are the lactone compounds, the cyclic carbonic acid esters, the linear carbonic acid esters, and the phosphoric acid esters, still more preferred are the lactone compounds, the cyclic carbonic acid esters, and the linear carbonic acid esters, and particularly preferred are mixed solutions of the cyclic carbonic acid esters and the linear carbonic acid esters in view of the output power of the battery and the charge and discharge cycle characteristics thereof. Most preferred is a mixed solution of ethylene carbonate (EC) and dimethyl carbonate (DMC).

EXAMPLES

The present invention will be described in detail by way of Examples, but the present invention will not be limited to the Examples. The term "part(s)" refers to part(s) by weight, and the term "%" refers to "% by weight" unless otherwise specified.

Reference Example 1

PEG (57.4 parts) having a number average molecular weight of 6,000 (calculated from the hydroxyl value) [manufactured by Sanyo Chemical Industries, Ltd., SP value = 9.4], ethylene glycol (EG) (8.0 parts), MDI (34.7 parts), and DMF (233 parts) were placed in a four-necked flask provided with a stirrer and a thermometer, and were reacted under a dry nitrogen atmosphere at 70°C for 10 hours to prepare a solution of Urethane resin (A-1) having a resin content of 30% and a viscosity of 600 poise (60 Pa ·s) (20°C).

The number average molecular weight of Urethane resin (A-1) determined by GPC was 200,000.

Reference Example 2

Operation was performed in the same manner as in Reference Example 1 except that PEG (57.4 parts) having a number average molecular weight of 6,000 in Reference Example 1 was replaced by polyhexamethylene carbonate diol (SP value = 9.75) (57.4 parts) having a number average molecular weight of 6,000 (calculated from the hydroxyl value). A solution of Urethane resin (A-2) having a resin content of 30% by weight and a viscosity of 600 poise (60 Pa ·s) (20°C) was prepared.

The number average molecular weight of Urethane resin (A-2) determined by GPC was 200,000.

Example 3

Ethyl acetate (83 parts) and methanol (17 parts) were placed in a four-necked flask equipped with a stirrer, a thermometer, a reflux cooling tube, a dropping funnel, and a nitrogen gas introducing tube, and were heated to 68°C. While nitrogen was being blown into the four-necked flask, a monomer compounding solution of methacrylic acid (242.8 parts), methyl methacrylate (97.1 parts), 2-ethylhexyl methacrylate (242.8 parts), ethyl acetate (52.1 parts), and methanol (10.7 parts) and an initiator solution of 2,2'-azobis(2,4-dimethylvaleronitrile) (0.263 parts) in ethyl acetate (34.2 parts), with stirring, were continuously dropped into the flask through the dropping funnel over 4 hours to perform radical polymerization. After dropping was completed, an additional initiator solution of 2,2'-azobis(2,4-dimethylvaleronitrile) (0.583 parts) in ethyl acetate (26 parts) was continuously dropped into the flask using the dropping funnel over 2 hours. Polymerization was further continued at the boiling point for 4 hours. The solvent was removed to prepare a resin (582 parts). Isopropanol (1,360 parts) was then added to prepare a solution of Copolymer (B-1) having a resin content of 30% by weight.

The number average molecular weight of Copolymer (B-1) determined by GPC was 100,000, and the SP value was 11.2.

Example 4

Ethyl acetate (83 parts) and methanol (17 parts) were placed in a four-necked flask equipped with a stirrer, a thermometer, a reflux cooling tube, a dropping funnel, and a nitrogen gas introducing tube, and were heated to 68°C. While nitrogen was being blown into the four-necked flask, a monomer compounding solution of methacrylic acid (29.1 parts), butyl methacrylate (29.1 parts), 2-ethylhexyl methacrylate (349.7 parts), an acrylate having a branched alkyl group having 24 carbon atoms (2-decyltetradecyl methacrylate) (174.8 parts), ethyl acetate (52.1 parts), and methanol (10.7 parts) and an initiator solution of 2,2'-azobis(2,4-dimethylvaleronitrile) (0.263 parts) in ethyl acetate (34.2 parts), with stirring, were continuously dropped into the flask through the dropping funnel over 4 hours to perform radical polymerization. After dropping was completed, an additional initiator solution of 2,2'-azobis(2,4-dimethylvaleronitrile) (0.583 parts) in ethyl acetate (26 parts) was continuously dropped into the flask using the dropping funnel over 2 hours. Polymerization was further continued at the boiling point for 4 hours. The solvent was removed to prepare a resin (582 parts). Isopropanol (1,360 parts) was added to prepare a solution of Copolymer (B-2) having a resin content of 30% by weight.

The number average molecular weight of Copolymer (B-2) determined by GPC was 96,000, and the SP value was 9.5.

Example 5

DMF (55.0 parts) was placed in a four-necked flask equipped with a stirrer, a thermometer, a reflux cooling tube, a dropping funnel, and a nitrogen gas introducing tube, and was heated to 75°C. While nitrogen was being blown into the four-necked flask, a monomer compounding solution of methacrylic acid (46.3 parts), methyl methacrylate (18.5 parts), 2-ethylhexyl methacrylate (46.3 parts), and DMF (50.1 parts) and an initiator solution of 2,2'-azobis(2,4-dimethylvaleronitrile) (0.111 parts) and 2,2'-azobis(2-methylbutyronitrile) (0.333 parts) in DMF (5.0 parts), with stirring, were continuously dropped into the flask through the dropping funnel over 1.5 hours to perform radical polymerization. After dropping was completed, the reaction solution was heated to 80°C to continue the reaction for 5 hours. An initiator solution of 2,2'-azobis(2-methylbutyronitrile) (0.033 parts) in DMF (5.0 parts) was added to continue the reaction for another 3 hours. DMF (143.0 parts) was added to prepare a solution of Copolymer (B-3) having a resin content of 30% by weight.

The number average molecular weight of Copolymer (B-3) determined by GPC was 52,000, and the SP value was 11.2.

Example 6

DMF (55.0 parts) was placed in a four-necked flask equipped with a stirrer, a thermometer, a reflux cooling tube, a dropping funnel, and a nitrogen gas introducing tube, and was heated to 75°C. While nitrogen was being blown into the four-necked flask, a monomer compounding solution of methacrylic acid (46.3 parts), methyl methacrylate (18.5 parts), 2-ethylhexyl methacrylate (46.3 parts), and DMF (50.1 parts) and an initiator solution of 2,2'-azobis(2,4-dimethylvaleronitrile) (0.111 parts) and 2,2'-azobis(2-methylbutyronitrile) (0.15 parts) in DMF (5.0 parts), with stirring, were continuously dropped into the flask through the dropping funnel over 1.5 hours to perform radical polymerization. After dropping was completed, the reaction solution was heated to 80°C to continue the reaction for 5 hours. An initiator solution of 2,2'-azobis(2-methylbutyronitrile) (0.033 parts) in DMF (5.0 parts) was added to continue the reaction for another 3 hours. DMF (143.0 parts) was added to prepare a solution of Copolymer (B-4) having a resin content of 30% by weight.

The number average molecular weight of Copolymer (B-4) determined by GPC was 150,000, and the SP value was 11.2.

Example 7

DMF (45.0 parts) was placed in a four-necked flask equipped with a stirrer, a thermometer, a reflux cooling tube, a dropping funnel, and a nitrogen gas introducing tube, and was heated to 75°C. While nitrogen was being blown into the four-necked flask, a monomer compounding solution of methacrylic acid (37.3 parts), methyl methacrylate (14.9 parts), 2-ethylhexyl methacrylate (37.3 parts), lithium styrenesulfonate (0.45 parts), and DMF (39.6 parts) and an initiator solution of 2,2'-azobis(2,4-dimethylvaleronitrile) (0.09 parts) and 2,2'-azobis(2-methylbutyronitrile) (0.27 parts) in DMF (5.0 parts), with stirring, were continuously dropped into the flask through the dropping funnel over 1.5 hours to perform radical polymerization. After dropping was completed, the reaction solution was heated to 80°C to continue the reaction for 5 hours. An initiator solution of 2,2'-azobis(2-methylbutyronitrile) (0.03 parts) in DMF (5.0 parts) was added, and the reaction solution was heated to 85°C to continue the reaction for another 3 hours. DMF (115.0 parts) was added to prepare a solution of Copolymer (B-5) having a resin content of 30% by weight.

The number average molecular weight of Copolymer (B-5) determined by GPC was 28,000, and the SP value was 11.2.

Example 8

DMF (45.0 parts) was placed in a four-necked flask equipped with a stirrer, a thermometer, a reflux cooling tube, a dropping funnel, and a nitrogen gas introducing tube, and was heated to 75°C. While nitrogen was being blown into the four-necked flask, a monomer compounding solution of methacrylic acid (37.3 parts), methyl methacrylate (14.9 parts), 2-ethylhexyl methacrylate (37.3 parts), lithium styrenesulfonate (0.45 parts), and DMF (39.6 parts) and an initiator solution of 2,2'-azobis(2,4-dimethylvaleronitrile) (0.09 parts) and 2,2'-azobis(2-methylbutyronitrile) (0.15 parts) in DMF (5.0 parts), with stirring, were continuously dropped into the flask through the dropping funnel over 1.5 hours to perform radical polymerization. After dropping was completed, the reaction solution was heated to 80°C to continue the reaction for 5 hours. An initiator solution of 2,2'-azobis(2-methylbutyronitrile) (0.03 parts) in DMF (5.0 parts) was added, and the reaction solution was heated to 85°C to continue the reaction for another 3 hours. DMF (115.0 parts) was added to prepare a solution of Copolymer (B-6) having a resin content of 30% by weight.

The number average molecular weight of Copolymer (B-6) determined by GPC was 150,000, and the SP value was 11.2.

Example 9

DMF (45.0 parts) was placed in a four-necked flask equipped with a stirrer, a thermometer, a reflux cooling tube, a dropping funnel, and a nitrogen gas introducing tube, and was heated to 75°C. While nitrogen was being blown into the four-necked flask, a monomer compounding solution of methacrylic acid (80 parts), methyl methacrylate (20 parts), and DMF (39.6 parts) and an initiator solution of 2,2'-azobis(2,4-dimethylvaleronitrile) (0.09 parts) and 2,2'-azobis(2-methylbutyronitrile) (0.15 parts) in DMF (5.0 parts), with stirring, were continuously dropped into the flask through the dropping funnel over 1.5 hours to perform radical polymerization. After dropping was completed, the reaction solution was heated to 80°C to continue the reaction for 5 hours. An initiator solution of 2,2'-azobis(2-methylbutyronitrile) (0.03 parts) in DMF (5.0 parts) was added, and the reaction solution was heated to 85°C to continue the reaction for another 3 hours. DMF (115.0 parts) was added to prepare a solution of Copolymer (B-7) having a resin content of 30% by weight.

The number average molecular weight of Copolymer (B-7) determined by GPC was 150,000, and the SP value was 12.0.

[Preparation of negative electrode for lithium ion battery]

Examples 12 to 18 and Reference Examples 10 and 11

Negative electrodes for lithium ion batteries were prepared by the following method with resin solutions of Urethane resins {(A-1) and (A-2)} and Copolymers {(B-1) to (B-7)} prepared in Examples 3 to 9 and Reference Examples 1 and 2.

Graphite powder [manufactured by Nippon Graphite Industries, Co., Ltd.] (1578 g) was placed in an all-purpose mixer. While the graphite powder was being stirred at room temperature and 150 rpm, each of the resin solutions (resin solid content: 30% by weight) (292 g) was dropped into the mixer over 60 minutes, and was mixed with the graphite powder. The mixture was stirred for another 30 minutes.

While the mixture was being stirred, three aliquots of acetylene black [manufactured by Denka Company Limited] (88 g) were added to the mixture, and were mixed therewith. The mixture was heated to 70°C with stirring for 30 minutes. The pressure was reduced to 0.01 MPa, and was kept for 30 minutes. Such an operation was performed to prepare a coated active material (1754 g).

The coated active material (90 parts), acetylene black (5 parts), a carboxymethyl cellulose sodium salt [manufactured by Dai-ichi Kogyo Seiyaku Co., Ltd., trade name: Cellogen F-BSH4] (2.5 parts), a styrene-butadiene rubber (SBR) emulsion [manufactured by JSR Corporation, resin content: 40% by weight] (6.25 parts), and water (30 parts) were added, and were sufficiently mixed with a planetary mill to prepare a slurry. The slurry was applied onto one surface of copper foil having a thickness of 20 $\mu$m. The slurry was dried at 80°C under normal pressure and for 3 hours, and was then vacuum dried at 80°C for 8 hours to evaporate the solvent. The product was punched into a shape of 17 mm$\phi$. Negative electrodes for lithium ion batteries in Examples 12 to 18 and Reference Examples 10 and 11 were thus prepared.

Comparative Example 1

The resin solution in Reference Example 10 was not used and no coated active material was prepared. A slurry was prepared in the same manner as in Reference Example 10 except that the coated active material (90 parts) was replaced by graphite powder (90 parts). A negative electrode for lithium ion batteries in Comparative Example 1 was prepared by the same procedure as in Reference Example 10.

Comparative Examples 2 and 3

Coated active materials were prepared in the same manner as in Reference Example 10 except that the resin solutions used were an SBR emulsion [manufactured by JSR Corporation] in Comparative Example 2 and an aqueous solution of sodium alginate in Comparative Example 3. Except for these, negative electrodes for lithium ion batteries in Comparative Examples 2 and 3 were prepared by the same procedure as in Reference Example 10.

[Preparation of positive electrode for lithium ion batteries]

Examples 21 to 27 and Reference Examples 19 and 20

Positive electrodes for lithium ion batteries were prepared by the following method with resin solutions of Urethane resins {(A-1) and (A-2)} and Copolymers {(B-1) to (B-7)} prepared in Examples 3 to 9 and Reference Examples 1 and 2.

LiCoO$_2$ powder (1578 g) was placed in an all-purpose mixer. While the LiCoO$_2$ powder was being stirred at room temperature and 150 rpm, each of the resin solutions (resin solid content: 30% by weight) (146 g) was dropped into the mixer over 60 minutes, and was mixed with the LiCoO$_2$ powder. The mixture was stirred for another 30 minutes.

While the mixture was being stirred, three aliquots of acetylene black [manufactured by Denka Company Limited] (44 g) were added to the mixture, and were mixed therewith. The mixture was heated to 70°C with stirring for 30 minutes. The pressure was reduced to 100 mmHg, and was kept for 30 minutes. Such an operation was performed to prepare a coated active material (1666 g).

The coated active material (90 parts), acetylene black (5 parts), and poly(vinylidene fluoride) [manufactured by Sigma-Aldrich Corporation] (5 parts) were added, and were sufficiently mixed with a mortar to prepare a slurry. The slurry was applied onto aluminum electrolytic foil having a thickness of 20 $\mu$m in the air with a wire bar. The coating was dried at 100°C for 15 minutes, and was further dried under reduced pressure (1.3 kPa) at 80°C for 8 hours. The product was punched into a shape of 17 mm$\phi$. Positive electrodes for lithium ion batteries in Examples 21 to 27 and Reference Examples 19 and 20 were thus prepared.

Comparative Example 4

The resin solution in Reference Example 19 was not used and no coated active material was prepared. A slurry was prepared in the same manner as in Reference Example 19 except that the coated active material (90 parts) was replaced by $LiCoO_2$ powder (90 parts). A positive electrode for lithium ion batteries in Comparative Example 4 was prepared by the same procedure as in Reference Example 19.

Comparative Examples 5 and 6

Coated active materials were prepared in the same manner as in Reference Example 19 except that the resin solutions used were an SBR emulsion [manufactured by JSR Corporation] in Comparative Example 5 and an aqueous solution of sodium alginate in Comparative Example 6. Except for these, positive electrodes for lithium ion batteries in Comparative Examples 5 and 6 were prepared by the same procedure as in Reference Example 19.

Examples 30 to 36 and Reference Examples 28 and 29

Urethane resins {(A-1) and (A-2)} and Copolymers {(B-1) to (B-7)} prepared in Examples 3 to 9 and Reference Examples 1 and 2 were evaluated for the resin performance by the following evaluation method. Lithium ion batteries including the negative electrodes for lithium ion batteries produced in Examples 12 to 18 and Reference Examples 10 and 11 or the positive electrodes for lithium ion batteries produced in Example 21 to 27 and Reference Examples 19 and 20 were produced using these resins by the following method. The battery characteristics and the degree of expansion of the batteries after a 20 cycle test were evaluated. The results are shown in Table 1.

Comparative Examples 7 to 9

The resin performances of the SBR and sodium alginate used in Comparative Examples 2, 3, 5, and 6 were evaluated by the following method. The results are shown as Comparative Examples 8 and 9.
Lithium ion batteries including the negative electrodes for lithium ion batteries produced in Comparative Examples 1 to 3 or the positive electrodes for lithium ion batteries produced in Comparative Examples 4 to 6 were prepared by the following method. The battery characteristics and the degree of expansion of the batteries after a 20 cycle test were evaluated. The results are shown in Table 1.

[Preparation of electrolyte solution for lithium ion batteries]

$LiPF_6$ was dissolved at a proportion of 1 mol/L in a mixed solvent (volume ratio: 1:1) of ethylene carbonate (EC) and dimethyl carbonate (DMC) to prepare an electrolyte solution for lithium ion batteries.

[Preparation of lithium ion battery for evaluating negative electrode]

A positive electrode made of Li metal of 17 mm$\phi$, a separator (Celgard 2500: made of polypropylene), and one of the negative electrodes prepared in Examples 12 to 18, Reference Examples 10 and 11 and Comparative Examples 1 to 3 were disposed in a 2032 type coin cell in this sequence from one end of the coin cell such that the applied surface of the negative electrode faced toward the positive electrode. A cell for a lithium ion battery was thus prepared. The electrolyte solution was injected into the cell. The cell was sealed. The cell was evaluated for the initial discharge capacity and the discharge capacity after 20 cycles by the following methods. The degree of expansion was also evaluated.

[Preparation of lithium ion battery for evaluating positive electrode]

A negative electrode made of Li metal of 17 mm$\phi$, two separators (Celgard 2500: made of polypropylene), and one of the positive electrodes prepared in Examples 21 to 27, Reference Examples 19 and 20 and Comparative Examples 4 to 6 were disposed in a 2032 type coin cell in this sequence from one end of the coin cell such that applied surface of the positive electrode faced toward the negative electrode. A cell for a lithium ion battery was thus prepared. The electrolyte solution was injected into the cell. The cell was sealed. The cell was evaluated for the initial discharge capacity and the discharge capacity after 20 cycles by the following methods. The degree of expansion was also evaluated.

<Evaluation of discharge capacity of lithium ion battery>

The cells were charged under room temperature with a charge and discharge measurement apparatus "Battery Analyzer Type 1470" [manufactured by TOYO Corporation] at a current of 0.2 C to a voltage of 2.5 V in evaluation of the negative electrode and to 4.3 V in evaluation of the positive electrode. After a pause for 10 minutes, the cells were discharged at a current of 0.2 C to a voltage of 10 mV in evaluation of the negative electrode and to 2.7 V in evaluation of the positive electrode. This charge and discharge operation was repeated 20 cycles. The battery capacity in the initial charge (initial discharge capacity) and the battery capacity at the 20th cycle (discharge capacity after 20 cycles) were measured.

[Method for evaluating degree of expansion]

The batteries after evaluation of the discharge capacity after 20 cycles were dissembled. The electrodes were punched to form a hole of 17 mm$\phi$, and the widths of the residual electrodes were measured seen from above to evaluate the degree of expansion from the following expression:

$$\text{degree of expansion (\%)} = \{[\text{width of electrode after 20 cycles of discharge (mm)} - 17]/17\} \times 100$$

The width of the electrode is defined as the largest length among the lengths connecting between two points on the outer periphery of the electrode.

[Method of evaluating resin performance]

Urethane resins {(A-1) and (A-2)} and Copolymers {(B-1) to (B-7)} prepared in Examples 3 to 9 and Reference Examples 1 and 2, and the SBR and sodium alginate used in Comparative Examples 2, 3, 5, and 6 were evaluated for the resin performance by the following method.

The "resin solution" in the following test refers to the solutions of Urethane resins {(A-1) and (A-2)} and the solutions of Copolymers {(B-1) to (B-7)} produced in Examples 3 to 9 and Reference Examples 1 and 2, and the SBR emulsion and the aqueous solution of sodium alginate used in Comparative Examples 2 and 3.

<Absorption test>

The resin solution was poured into a petri dish, and the solvent was completely volatilized and removed through drying under reduced pressure. The resulting resin film was peeled off from the petri dish, and was punched into a dumbbell shape according to ASTM D683 (shape of the test piece: Type II) to prepare a test sample. The thickness of the test sample was 500 $\mu$m. The weight of the test sample was measured before immersion described below.

The test sample was immersed in an electrolyte solution at 50°C for 3 days. The electrolyte solution was prepared by dissolving an electrolyte $LiPF_6$ in a mixed solvent of ethylene carbonate (EC) and diethyl carbonate (DEC) at EC:DEC = 3:7 (volume proportion) such that the concentration of $LiPF_6$ is 1 mol/L. The weight of the test sample after immersion was measured.

The liquid absorbing rate (%) was determined from the following expression:

$$\text{liquid absorbing rate (\%)} = [(\text{weight of test sample after immersion in electrolyte solution} - \text{weight of test sample before immersion in electrolyte solution})/\text{weight of test sample before immersion in electrolyte solution}] \times 100$$

<Method of measuring tensile elongation at break>

A test sample having the same dumbbell shape as that in the absorption test and having a thickness of 500 $\mu$m was prepared, and was immersed in the same electrolyte solution used in the absorption test at 50°C for 3 days to be saturated with the electrolyte solution.

A tensile test was performed at 25°C at a tensile rate of 500 mm/min with a tensile tester by the procedure in accordance with ASTM D683. The elongation until the test piece broken was calculated from the following expression:

$$\text{tensile elongation at break (\%)} = [(\text{length of test piece at break - length of test piece before test})/\text{length of test piece before test}] \times 100$$

<Method of measuring ion conductivity>

The resin solution was poured into a petri dish, and the solvent was completely volatilized and removed through drying under reduced pressure. The resulting resin film was peeled off from the petri dish to prepare a test resin film.

The test resin film was punched into a shape having a diameter of 1.5 cm in a dry box to prepare a sample for measuring ion conductivity. The sample was sandwiched between stainless steel electrodes, and the real component R ($\Omega$) of impedance was determined at room temperature (20°C) by an alternating current impedance method.

The ion conductivity $\sigma$ (mS/cm) of the resin film was determined from the impedance component R ($\Omega$), the thickness d (cm) of the resin film, and the contact area A (cm$^2$) between the electrodes and the resin film.

$$\text{ion conductivity } \sigma \text{ (mS/cm)} = d/(R \times A)$$

[Table 1]

| | Resin solution | Molecular weight (Mn) | Evaluation of resin performance | | | Evaluation of battery | | | | | | | |
|---|---|---|---|---|---|---|---|---|---|---|---|---|---|
| | | | | | | | Negative electrode | | | | Positive electrode | | |
| | | | Liquid absorbing rate (%) | Ion conductivity (mS/cm) | Tensile elongation at break (%) | Example | Initial discharge capacity (mAh/g) | Discharge capacity after 20 cycles (mAh/g) | Degree of expansion (%) | Example | Initial discharge capacity (mAh/g) | Discharge capacity after 20 cycles (mAh/g) | Degree of expansion (%) |
| Example 28 | (A-1) | 200,000 | 220 | 4.2 | 50 | Example 10 | 371 | 371 | 0.5 | Example 19 | 155 | 149 | 0.2 |
| Example 29 | (A-2) | 200,000 | 250 | 3.5 | 70 | Example 11 | 368 | 369 | 0.1 | Example 20 | 155 | 153 | 0.1 |
| Example 30 | (B-1) | 100,000 | 41 | 2.1 | 13 | Example 12 | 368 | 368 | 0.2 | Example 21 | 153 | 152 | 0.2 |
| Example 31 | (B-2) | 96,000 | 46 | 2.4 | 15 | Example 13 | 370 | 371 | 0.3 | Example 22 | 154 | 152 | 0.2 |
| Example 32 | (B-3) | 52,000 | 40 | 2.3 | 13 | Example 14 | 368 | 367 | 0.2 | Example 23 | 155 | 153 | 0.3 |
| Example 33 | (B-4) | 150,000 | 39 | 2.2 | 15 | Example 15 | 367 | 366 | 0.3 | Example 24 | 154 | 154 | 0.2 |
| Example 34 | (B-5) | 28,000 | 39 | 2.2 | 14 | Example 16 | 369 | 368 | 0.3 | Example 25 | 155 | 154 | 0.2 |
| Example 35 | (B-6) | 150,000 | 38 | 2.1 | 14 | Example 17 | 367 | 365 | 0.3 | Example 26 | 155 | 152 | 0.2 |
| Example 36 | (B-7) | 150,000 | 14 | 1.8 | 11 | Example 18 | 365 | 357 | 0.7 | Example 27 | 154 | 149 | 0.3 |
| Comparative Example 7 | None | - | - | - | - | Comparative Example 1 | 372 | 371 | 3.0 | Comparative Example 4 | 155 | 155 | 2.0 |
| Comparative Example 8 | SBR | - | 3 | ND | 800 | Comparative Example 2 | 15 | 12 | 0.4 | Comparative Example 5 | 8 | 7 | 0.1 |
| Comparative Example 9 | Alginic acid | - | 4 | ND | 2.5 | Comparative Example 3 | 360 | 364 | 2.7 | Comparative Example 6 | 143 | 127 | 1.5 |

In Table 1, Examples 10, 11, 19, 20, 28 and 29 are Reference Examples.

The results in Table 1 evidently show that expansion of lithium ion batteries can be prevented if the surface of the active material for lithium ion batteries is coated with the resin for coating an active material for lithium ion batteries according to the present invention. In addition, since the resin for coating an active material for lithium ion batteries used according to the present invention has ion conductivity, the resin can achieve sufficient charge and discharge characteristics of lithium ion batteries without inhibiting the function of the active material.

INDUSTRIAL APPLICABILITY

Because of the flexibility, the resin for coating an active material for lithium ion batteries used according to the present invention can relax a change in the volume of the electrode and prevent expansion of the electrode by coating the surface of the active material for lithium ion batteries. The coated active material for lithium ion batteries prepared according to the present invention is useful as an active material particularly for bipolar secondary batteries and lithium ion secondary batteries used in mobile phones, personal computers, hybrid vehicles, and electric vehicles.

**Claims**

1. A coated active material for lithium ion batteries comprising:

    a resin composition for coating an active material for lithium ion batteries, comprising:

        a resin for coating an active material for lithium ion batteries; and
        a conductive additive (X); and

    an active material for lithium ion batteries (Y),
    wherein the surface of the active material for lithium ion batteries (Y) is partially or entirely coated with the resin composition for coating an active material for lithium ion batteries,
    the resin for coating an active material for lithium ion batteries has a liquid absorbing rate of 10% or more when the resin is immersed in an electrolyte solution, and a tensile elongation at break of 10% or more when the resin is saturated with the electrolyte solution,
    the liquid absorbing rate is determined from the weights of the coating resin measured before and after immersion in the electrolyte solution and the following expression:

    liquid absorbing rate (%) = [(weight of coating resin after immersion in electrolyte solution - weight of coating resin before immersion in electrolyte solution)/weight of coating resin before immersion in electrolyte solution] × 100, the electrolyte solution used to determine the liquid absorbing rate is prepared by dissolving an electrolyte $LiPF_6$ in a mixed solvent of ethylene carbonate (EC) and diethyl carbonate (DEC) at EC:DEC = 3:7 (volume proportion) such that the concentration of $LiPF_6$ is 1 mol/L,
    in determination of the liquid absorbing rate, the resin is immersed in the electrolyte solution at 50°C for 3 days,
    the tensile elongation at break is determined as follows: the coating resin is punched into a dumbbell shape; this test piece is immersed in an electrolyte solution at 50°C for 3 days in the same manner as in determination of the liquid absorbing rate to saturate the coating resin with the electrolyte solution; and the tensile elongation at break of the resulting test piece is measured in accordance with ASTM D683 using a shape of test piece: Type II,
    the tensile elongation at break is a value obtained by calculating the elongation until the test piece breaks in a tensile test from the following expression:

    tensile elongation at break (%) = [(length of test piece at break - length of test piece before test)/length of test piece before test] × 100, the resin for coating an active material for lithium ion batteries comprises a vinyl resin,
    the active material for lithium ion batteries (Y) includes a positive electrode active material (Y1) or a negative electrode active material (Y2),
    the positive electrode active material (Y1) includes complex oxides of lithium and transition metal, transition metal oxide, transition metal sulfide, or conductive polymer, and
the negative electrode active material (Y2) includes graphite, amorphous carbon, burned high-molecular compound, cokes, carbon fibers, conductive polymers, tin, or silicon.

2. The coated active material according to claim 1,
wherein the vinyl resin comprises a polymer (B) containing a vinyl monomer (b) as an essential constituent monomer.

3. The coated active material according to claim 2,
wherein the vinyl monomer (b) comprises a vinyl monomer (b1) having a carboxyl group, and a vinyl monomer (b2) represented by Formula (1):

$$CH_2=C(R^1)COOR^2 \qquad (1)$$

wherein $R^1$ is a hydrogen atom or a methyl group; and $R^2$ is a branched alkyl group having 4 to 36 carbon atoms.

4. The coated active material according to claim 3,
wherein the vinyl monomer (b) further comprises a copolymerizable vinyl monomer (b3) containing no active hydrogen; the content of the vinyl monomer (b1) in the monomers forming the polymer (B) is 30 to 60% by weight relative to the weight of the polymer (B); the content of the vinyl monomer (b2) in the monomers forming the polymer (B) is 5 to 60% by weight relative to the weight of the polymer (B); and the content of the vinyl monomer (b3) in the monomers forming the polymer (B) is 5 to 80% by weight relative to the weight of the polymer (B).

5. The coated active material according to any one of claims 2 to 4,
wherein the polymer (B) has a number average molecular weight of 3,000 to 2,000,000.

6. The coated active material according to any one of claims 2 to 5,
wherein the polymer (B) has a solubility parameter of 9.0 to 20.0 $(cal/cm^3)^{1/2}$,
the solubility parameter, SP value, is calculated by Fedors method, and is expressed by the following expression:

$$SP\ value\ (\delta) = (\Delta H/V)^{1/2}$$

wherein $\Delta H$ represents molar heat of vaporization (cal), and V represents a molar volume $(cm^3)$.

7. The coated active material according to any one of claims 2 to 6,
wherein the resin is a crosslinked polymer prepared by crosslinking the polymer (B) with a polyepoxy compound (c1) and/or a polyol compound (c2).

**Patentansprüche**

1. Beschichtetes Aktivmaterial für Lithiumionenbatterien, umfassend:
eine Harzzusammensetzung zum Beschichten eines Aktivmaterials für Lithiumionenbatterien, umfassend:

ein Harz zum Beschichten eines Aktivmaterials für Lithiumionenbatterien; und
ein leitfähiges Additiv (X); und
ein Aktivmaterial für Lithiumionenbatterien (Y),

wobei die Oberfläche des Aktivmaterials für Lithiumionenbatterien (Y) teilweise oder vollständig mit der Harzzusammensetzung zum Beschichten eines Aktivmaterials für Lithiumionenbatterien beschichtet ist,
das Harz zum Beschichten eines Aktivmaterials für Lithiumionenbatterien eine Flüssigkeitsabsorptionsrate von 10% oder mehr hat, wenn das Harz in eine Elektrolytlösung eingetaucht ist, und eine Reißdehnung von 10% oder mehr hat, wenn das Harz mit der Elektrolytlösung gesättigt ist,
die Flüssigkeitsabsorptionsrate aus den Gewichten des Beschichtungsharzes, die vor und nach dem Eintauchen in die Elektrolytlösung gemessen wurden, und dem folgenden Ausdruck bestimmt wird:

Flüssigkeitsabsorptionsrate (%) = [(Gewicht des Beschichtungsharzes nach dem Eintauchen in die Elektrolytlösung - Gewicht des Beschichtungsharzes vor dem Eintauchen in die Elektrolytlösung)/Gewicht des Beschichtungsharzes vor dem Eintauchen in die Elektrolytlösung] × 100,

die zur Bestimmung der Flüssigkeitsabsorptionsrate verwendete Elektrolytlösung hergestellt wird, indem ein Elektrolyt $LiPF_6$ in einem Lösungsmittelgemisch aus Ethylencarbonat (EC) und Diethylcarbonat (DEC) bei EC:DEC = 3:7 (Volumenanteil) so gelöst wird, dass die Konzentration von $LiPF_6$ 1 mol/l ist,
zur Bestimmung der Flüssigkeitsabsorptionsrate das Harz 3 Tage lang bei 50 °C in die Elektrolytlösung eingetaucht wird,
die Reißdehnung wie folgt bestimmt wird: Das Beschichtungsharz wird in eine Hantelform gestanzt; dieser Prüfkörper wird in der gleichen Weise wie bei der Bestimmung der Flüssigkeitsabsorptionsrate 3 Tage lang bei 50 °C in eine Elektrolytlösung getaucht, um das Beschichtungsharz mit der Elektrolytlösung zu sättigen, und die Reißdehnung des resultierenden Prüfkörpers wird gemäß ASTM D683 unter Verwendung einer Form des Prüfkörpers: Typ II gemessen,
die Reißdehnung ein Wert ist, der sich aus der Berechnung der Dehnung des Prüfkörpers bis zum Bruch in einem Zugversuch nach folgendem Ausdruck ergibt:

Reißdehnung (%) = [(Länge des Prüfkörpers bei Bruch - Länge des Prüfkörpers vor dem Test)/Länge des Prüfkörpers vor dem Test] × 100,

das Harz zum Beschichten eines Aktivmaterials für Lithiumionenbatterien ein Vinylharz aufweist,
das Aktivmaterial für Lithiumionenbatterien (Y) ein Aktivmaterial für die positive Elektrode (Y1) oder ein Aktivmaterial für die negative Elektrode (Y2) umfasst,
das Aktivmaterial der positiven Elektrode (Y1) komplexe Oxide von Lithium und Übergangsmetall, Übergangsmetalloxid, Übergangsmetallsulfid, oder leitfähiges Polymer umfasst, und
das Aktivmaterial der negativen Elektrode (Y2) Graphit, amorphen Kohlenstoff, verbrannte hochmolekulare Verbindungen, Koks, Kohlenstofffasern, leitfähige Polymere, Zinn oder Silizium umfasst.

2. Beschichtetes Aktivmaterial nach Anspruch 1,
wobei das Vinylharz ein Polymer (B) aufweist, das ein Vinylmonomer (b) als wesentlichen Bestandteil des Monomers enthält.

3. Beschichtetes Aktivmaterial nach Anspruch 2,
wobei das Vinylmonomer (b) ein Vinylmonomer (b1) mit einer Carboxylgruppe und ein Vinylmonomer (b2) der Formel (1) aufweist:

$$CH_2=C(R^1)COOR^2 \qquad (1)$$

wobei $R^1$ ein Wasserstoffatom oder eine Methylgruppe ist; und $R^2$ eine verzweigte Alkylgruppe mit 4 bis 36 Kohlenstoffatomen ist.

4. Beschichtetes Aktivmaterial nach Anspruch 3,
wobei das Vinylmonomer (b) ferner ein copolymerisierbares Vinylmonomer (b3) aufweist, das keinen aktiven Wasserstoff enthält; der Gehalt des Vinylmonomers (b1) in den Monomeren, die das Polymer (B) bilden, 30 bis 60 Gew.-% beträgt, bezogen auf das Gewicht des Polymers (B); der Gehalt des Vinylmonomers (b2) in den Monomeren, die das Polymer (B) bilden, 5 bis 60 Gew.-% beträgt, bezogen auf das Gewicht des Polymers (B); und der Gehalt des Vinylmonomers (b3) in den Monomeren, die das Polymer (B) bilden, 5 bis 80 Gew.-% beträgt, bezogen auf das Gewicht des Polymers (B).

5. Beschichtetes Aktivmaterial nach einem der Ansprüche 2 bis 4,
wobei das Polymer (B) ein Zahlenmittel des Molekulargewichts von 3.000 bis 2.000.000 hat.

6. Beschichtetes Aktivmaterial nach einem der Ansprüche 2 bis 5,

wobei das Polymer (B) einen Löslichkeitsparameter von 9,0 bis 20,0 $(cal/cm^3)^{1/2}$ hat, der Löslichkeitsparameter, SP-Wert, nach dem Fedors-Verfahren berechnet und durch den folgenden Ausdruck ausgedrückt wird:

$$SP\text{-Wert } (\delta) = (\Delta H/V)^{1/2}$$

wobei $\Delta H$ die molare Verdampfungswärme (cal) darstellt und V das molare Volumen $(cm^3)$ darstellt.

**7.** Beschichtetes Aktivmaterial nach einem der Ansprüche 2 bis 6,
wobei das Harz ein vernetztes Polymer ist, das durch Vernetzen des Polymers (B) mit einer Polyepoxyverbindung (c1) und/oder einer Polyolverbindung (c2) hergestellt wird.

**Revendications**

**1.** Matériau actif revêtu pour batteries au lithium-ion comprenant :

une composition de résine servant à revêtir un matériau actif pour batteries au lithium-ion, comprenant :

une résine servant à revêtir un matériau actif pour batteries au lithium-ion ; et
un additif conducteur (X) ; et

un matériau actif pour batteries au lithium-ion (Y),
dans lequel la surface du matériau actif pour batteries au lithium-ion (Y) est partiellement ou entièrement revêtue de la composition de résine servant à revêtir un matériau actif pour batteries au lithium-ion,
la résine servant à revêtir un matériau actif pour batteries au lithium-ion a une vitesse d'absorption des liquides supérieure ou égale à 10% lorsque la résine est immergée dans une solution d'électrolyte, et un allongement en traction à la rupture supérieur ou égal à 10% lorsque la résine est saturée avec la solution d'électrolyte,
la vitesse d'absorption des liquides est déterminée à partir des poids de la résine de revêtement mesurés avant et après immersion dans la solution d'électrolyte et à partir de l'expression suivante :

vitesse d'absorption des liquides (%) = [(poids de la résine de revêtement après immersion dans une solution d'électrolyte - poids de la résine de revêtement avant immersion dans une solution d'électrolyte)/poids de la résine de revêtement avant immersion dans une solution d'électrolyte] x 100,

la solution d'électrolyte utilisée pour déterminer la vitesse d'absorption des liquides est préparée en dissolvant un électrolyte $LiPF_6$ dans un solvant mixte de carbonate d'éthylène (CE) et de carbonate de diéthyle (CDE) à CE: CDE = 3:7 (proportion en volume) de sorte que la concentration de $LiPF_6$ soit de 1 mol/L,
dans la détermination de la vitesse d'absorption des liquides, la résine est immergée dans la solution d'électrolyte à 50°C pendant 3 jours,
l'allongement en traction à la rupture est déterminé comme suit : la résine de revêtement est poinçonnée sous forme d'haltère ; cette éprouvette est immergée dans une solution d'électrolyte à 50°C pendant 3 jours de la même manière que pour la détermination de la vitesse d'absorption des liquides afin de saturer la résine de revêtement avec la solution d'électrolyte ; et l'allongement en traction à la rupture de l'éprouvette obtenue est mesuré conformément à la norme ASTM D683 en utilisant une forme d'éprouvette : Type II,
l'allongement en traction à la rupture est une valeur obtenue en calculant l'allongement jusqu'à rupture de l'éprouvette dans un essai de traction à partir de l'expression suivante :

allongement en traction à la rupture (%) = [(longueur de l'éprouvette à la rupture - longueur de l'éprouvette avant l'essai)/longueur de l'éprouvette avant l'essai] x 100,

la résine servant à revêtir un matériau actif pour batteries au lithium-ion comprend une résine vinylique,
le matériau actif pour batteries au lithium-ion (Y) comporte un matériau actif d'électrode positive (Y1) ou un matériau actif d'électrode négative (Y2),
le matériau actif d'électrode positive (Y1) comporte des oxydes complexes de lithium et de métal de transition, un oxyde de métal de transition, un sulfure de métal de transition ou un polymère conducteur, et
le matériau actif d'électrode négative (Y2) comporte du graphite, du carbone amorphe, un composé de poids moléculaire élevé brûlé, du coke, des fibres de carbone, des polymères conducteurs, de l'étain ou du silicium.

**2.** Matériau actif revêtu selon la revendication 1,
dans lequel la résine vinylique comprend un polymère (B) contenant un monomère vinylique (b) en tant que monomère constituant essentiel.

**3.** Matériau actif revêtu selon la revendication 2,
dans lequel le monomère vinylique (b) comprend un monomère vinylique (b1) ayant un groupe carboxyle et un monomère vinylique (b2) représenté par la formule (1) :

$$CH_2=C(R^1)COOR^2 \qquad (1)$$

où $R^1$ représente un atome d'hydrogène ou un groupe méthyle ; et $R^2$ représente un groupe alkyle ramifié ayant 4 à 36 atomes de carbone.

**4.** Matériau actif revêtu selon la revendication 3,
dans lequel le monomère vinylique (b) comprend en outre un monomère vinylique copolymérisable (b3) ne contenant pas d'hydrogène actif ; la teneur en monomère vinylique (b1) dans les monomères formant le polymère (B) est de 30 à 60% en poids par rapport au poids du polymère (B) ; la teneur en monomère vinylique (b2) dans les monomères formant le polymère (B) est de 5 à 60% en poids par rapport au poids du polymère (B) ; et la teneur en monomère vinylique (b3) dans les monomères formant le polymère (B) est de 5 à 80% en poids par rapport au poids du polymère (B).

**5.** Matériau actif revêtu selon l'une quelconque des revendications 2 à 4,
dans lequel le polymère (B) a un poids moléculaire moyen en nombre allant de 3000 à 2000000.

**6.** Matériau actif revêtu selon l'une quelconque des revendications 2 à 5, dans lequel le polymère (B) a un paramètre de solubilité allant de 9,0 à 20,0 $(cal/cm^3)^{1/2}$,
le paramètre de solubilité, valeur SP, est calculé par la méthode de Fedors et est exprimé par l'expression suivante :

$$\text{Valeur SP } (\delta) = (\Delta H/V)^{1/2}$$

où $\Delta H$ représente la chaleur molaire de vaporisation (cal) et V représente un volume molaire $(cm^3)$.

**7.** Matériau actif revêtu selon l'une quelconque des revendications 2 à 6,
dans lequel la résine est un polymère réticulé préparé par réticulation du polymère (B) avec un composé polyépoxy (c1) et/ou un composé polyol (c2).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010140795 A

- US 2002031701 A1

**Non-patent literature cited in the description**

- **ROBERT F. FEDORS.** *POLYMER ENGINEERING AND SCIENCE,* 1974, vol. 14 (2), 151-153